Europäisches Patentamt

European Patent Office

Office européen des brevets

(11) Veröffentlichungsnummer: **0 396 079**
**A2**

## (12) EUROPÄISCHE PATENTANMELDUNG

(21) Anmeldenummer: 90108216.4

(51) Int. Cl.5: **B30B 9/10, B30B 9/24**

(22) Anmeldetag: 30.04.90

(30) Priorität: 03.05.89 DE 3914661

(43) Veröffentlichungstag der Anmeldung:
**07.11.90 Patentblatt 90/45**

(84) Benannte Vertragsstaaten:
**AT CH FR GB IT LI NL**

(71) Anmelder: **Bähr, Albert**
**Am Hungerberg 10**
**D-6682 Ottweiler 2(DE)**

(72) Erfinder: **Bähr, Albert**
**Am Hungerberg 10**
**D-6682 Ottweiler 2(DE)**

(74) Vertreter: **Brose, D. Karl**
**PATENTANWÄLTE BROSE & BROSE Wiener**
**Strasse 2**
**D-8023 München-Pullach(DE)**

(54) **Vorrichtung zum Entwässern von Schlamm und ähnlichen Substanzen.**

(57) Die Erfindung betrifft eine Vorrichtung (1) zum Entwässern von Schlam und ähnlichen Subsanzen. Einen Hochdruckstufe (2) und mindestens eine vor dieser liegende Entwässerungsstufe (3, 4, 5) sind miteinander kombiniert, wobei der zu entwässernde Schlamm (6) kontinuierlich der Vorrichtung (1) zugeführt und anschließend in ein sich an stationären Druckplatten (7) intermittierendes, vorbeibewegendes geschlossenes Schlammkammervolumen (9) eingespeist wird. Das Schlammkammervolumen (9) wird zwischen den Druckplatten (7, 8) einem Hochdruck ausgesetzt und der erhaltene Schlammkuchen intermittierend ausgetragen. Eine Stapeleinrichtung (11) ist zwischen der Hochdruckstufe (2) und der oder den vorangehenden Vorentwässerungsstufen (3, 4, 5) geringeren Drucks angeordnet.

Fig.1

Die Erfindung betrifft eine Vorrichtung zum Entwässern von Schlamm und ähnlichen Substanzen, insbesondere von Abwasser, Abfall- und Produktionsschlämmen, mit Entwässerungsflächen, welche einer Hochdruckstufe und mindestens einer vor dieser liegenden Entwässerungsstufe geringeren Drucks zugeordnet sind, bei der der zu entwässernde Schlamm kontinuierlich der Vorrichtung zugeführt und anschließend in ein sich an stationären Druckplatten intermittierend vorbeibewegendes, geschlossenes Schlammkammervolumen eingespeist wird, wobei das Schlammkammervolumen zwischen den Druckplatten einem Hochdruck ausgesetzt und der erhaltene Schlammkuchen intermittierend ausgetragen wird, und wobei ferner zwischen der kontinuierlichen Schlammzuführung und der diskontinuierlichen intermittierenden Schlammeinspeisung eine Puffer- oder Stapeleinrichtung vorgesehen ist.

Eine Vorrichtung dieser Art ist aus dem europäischen Patent 0 063 991 bekannt. Bei der hiernach bekannten Sipalpresse wird der zu entwässernde Schlamm zunächst kontinuierlich auf ein etwa waagerecht angeordnetes Siebband aufgegeben, worauf ein oberes Siebband dem unteren Siebband zugeführt und die beiden Siebbänder in geschlossenem Zustand unter Einschließung des zu entwässernden Schlamms serpentinenartig durch eine Vielzahl von sich gegenüberliegenden Druckplatten geführt werden. Zum Entwässern des Schlamms zwischen den Druckplatten werden die Siebbänder stillgesetzt, wobei als Puffereinrichtung zwischen der kontinuierlichen Schlammzuführung und der diskontinuier lichen, intermittierenden Schlammeinspeisung eine mechanische Ausgleichsvorrichtung vorgesehen ist. Hierbei wird über bewegliche Walzenanordnung während des Stillstands der Siebbänder das von den Siebbändern definierte geschlossene Schlammkammervolumen vergrößert, indem entsprechende Umlenkwalzen zur Verlängerung des Schlammkammervolumens translatorisch bewegt werden. Diese bekannte Vorrichtung ist zwar insoweit bereits vorteilhaft, als trotz der intermittierenden Bewegung der Siebbänder in der Preßzone der zu entwässernde Schlamm kontinuierlich der Vorrichtung zugeführt werden kann. Andererseits erfordert die dort vorgesehene Puffereinrichtung sowohl in konstruktiver als auch in steuerungstechnischer Hinsicht eine vergleichsweise großen Aufwand.

Nach einem früheren Vorschlag des Anmelders (deutsche Patentanmeldung P 36 35 766) ist es bei kontinuierlicher Schlammeinspeisung und diskontinuierlicher, intermittierender Austragung des Schlammkauchens ferner bekannt, die Vorentwässerungsstufe als Puffereinrichtung auszubilden, wobei diese unmittelbar nach der Schlammaufgabe angeordnet ist. Hierbei wird die Schlammdruckkammer durch ein Filterband, ein diesem zugeordnetes Kanalband und ein oberes Druckband mit einer seitlichen Abdichtung gebildet, welche im Bereich der Druckplatten durch eine mit laufende Runddichtung gebildet wird. Die Schlammdruckkammer in der Hochdruckzone ist in Richtung der Schlammaufgabe mittels einer Steuerklappe verschließbar und in Richtung des Schlammaustrags offen. Es wurde hierbei davon ausgegangen, daß der sich bei Druck verdichtende Schlamm selbst den Austritt versperrt. Das untere Kanalband, das untere Filterband und das obere Druckband sowie die beiden mitlaufenden seitlichen Runddichtungen bewegen sich beim intermittierenden Schlammein- und -auslaufen der Druckkammer synchron und stehen beim Entwässerungsvorgang zwischen den Druckplatten still.

Bei einer Verbesserung dieses Vorschlags gemäß der nicht vorveröffentlichten deutschen Patentanmeldung P 37 34 974 .9 ist die Vorentwässerungsstufe ebenfalls als Puffereinrichtung ausgebildet und wird durch schrägstehende Spaltsiebe verbessert. Die Puffereinrichtung ist hierbei ebenfalls unmittelbar der Schlammaufgabe nachgeschaltet.

Aus der DE-OS 27 05 285 ist ferner noch eine Vorrichtung zur Schlammentwässerung bekannt, bei welcher die Schlammaufgabe und der Schlammkuchenaustrag beide intermittierend erfolgen. Das heißt, diese bekannte Maschine arbeitet wie eine normale Kammerfilterpresse. Weiterhin kann bei dieser bekannten Konstruktion aufgrund der Tatsache, daß die beiden Filterbänder keine seitlichen Abdichtungen aufweisen, beim Preßvorgang des Schlamms zwischen den Platten der Schlamm seitlich ausweichen.

Ausgehend von einer Vorrichtung der eingangs definierten Art liegt der Erfindung die Aufgabe zugrunde, den Wirkungsgrad einer derartigen Vorrichtung unter konstruktiver Vereinfachung erheblich zu verbessern.

Diese Aufgabe wird erfindungsgemäß dadurch gelöst, daß die Puffer oder Stapeleinrichtung zwischen der Hochdruckstufe und der/oder den vorausgehenden Vorentwässerungsstufen geringeren Drucks angeordnet ist. Es ist offensichtlich, daß durch diese Ausgestaltung eine erhebliche Steigerung des Wirkungsgrades möglich ist, da die Puffereinrichtung nur das verringerte Volumen nach der Vorentwässerung aufnehmen muß. So werden beispielsweise 20 cbm Schlamm pro Stunde nach Durchlaufen der Vorentwässerungseinrichtungen auf unter 4 cbm/h reduziert. Hierdurch können einerseits erhebliche konstruktive Vereinfachungen vorgenommen werden oder andererseits auch der Preßdruck der Hochdruckstufe entsprechend verlängert werden, da von dem geringeren Volumen als Durchsatzvolumen ausgegangen werden kann.

Bei einer besonders bevorzugten Ausführungsform nach der Erfindung ist die Stapeleinrichtung durch mindestens eine zweite Hochdruckstufe gebildet, wobei eine Umschalteinrichtung zum abwechselnden Füllen der Hochdruckstufen vorgesehen ist, derart, daß die mindestens beiden Hochdruckstufen abwechselnd jeweils die Stapeleinrichtung für die jeweils den Preßhub ausführende Hochdruckstufe bilden und wobei die Umschalteinrichtung zwischen den mehreren Hochdruckstufen als Umlenkklappe gebildet ist, welche über eine Schütte od. dgl. abwechselnd den Ausgang einer Mitteldruckstufe mit einer der Hochdruckstufen verbindet. Bei dieser Ausführungsform bildet daher immer mindestens eine zusätzliche Hochdruckstufe die Stapeleinrichtung, wobei während des Befüllens die jeweils mindestens andere Hochdruckstufe einen Preßhub ausführt. Hierdurch wird trotz intermittierender Arbeitsweise der Hochdruckstufen praktisch ein kontinuierlicher Austrag des entwässerten Schlammkuchens erreicht.

Im einzelnen kann auch vorgesehen sein, daß die Stapeleinrichtung als Stapelband ausgebildet ist, welches bevorzugt in seiner Antriebsrichtung umkehrbar ist.

Eine weitere Alternative der Erfindung sieht vor, daß die Stapeleinrichtung als Vorratsbunker ausgebildet ist, daß dieser eine Portioniereinrichtung aufweist, welche den kontinuierlich zugeführten Schlamm abwechselnd in der Einspeismenge für die Hochdruckstufe entsprechende Portionen aufteilt, und daß die Portioniereinrichtung als den Vorratsbunker in zwei Kammern unterteilende Steuerklappe ausgebildet ist, welche den kontinuierlich zugeführten Schlamm abwechselnd in Portionen aufnehmen und welche bei Umschaltung der Steuerklappe jeweils eine Portion zur Einspeisung in die Hochdruckstufe freigeben.

Gemäß einem besonders vorteilhaften Merkmal der Erfindung ist weiterhin vorgesehen, daß die Vorrichtung aus einer Schwerkraft-Vorentwässerungsstufe, einer Mitteldruckstufe oder Keilstufe sowie der Hochdruckstufe besteht, und daß die Puffer-oder Stapeleinrichtung zwischen der Vorentwässerungsstufe und/oder der Mitteldruckstufe und/oder zwischen der Mitteldruckstufe und der Hochdruckstufe angeordnet ist. Bei sämtlichen Ausführungsvarianten werden hierbei die erfindungsgemäßen Vorteile aus der Volumenverringerung erzielt.

Bei einer besonders bevorzugten Ausführungsform ist in jeder der Entwässerungsstufen ein unabhängig angetriebenes endloses Filterband vorgesehen und die Filterbänder der Vorentwässerungsstufen und der Mitteldruckstufe sind kontinuierlich mit regelbaren Geschwindigkeiten angetrieben. Hierdurch können entsprechend der kontinuierlichen Schlammeinspeisung Schichthöhe des Schlamms und die Entwässerungszeit in jeder Stufe dem spezifischen Entwässerungsverhalten des jeweiligen Schlamms angepaßt werden. Darüber hinaus können sämtliche Entwässerungsstufen einzeln oder in der Kombination miteinander arbeiten.

Entsprechend der hierbei erzielbaren Vorteile ist es daher vorteilhaft, daß die Filterbänder der einzelnen Entwässerungsstufen unterschiedliche Maschenweiten und Antriebsgeschwindigkeiten aufweisen.

Bei einer besonders bevorzugten Ausführungsform nach der Erfindung ist vorgesehen, daß die Vorentwässerungsstufe aus zwei parallelen Schwerkraft-Vorentwässerungsstufen besteht, welche eine gemeinsame Schlammzuführung aufweisen und deren Ausgänge auf der Eingangsseite der Mitteldruckstufe münden, daß die Schlammzuführung über Wehre die beiden Schwerkraft-Vorentwässerungsstufen mit gleichen Schlammengen beschickt, und daß die Filterbänder der Schwerkraft-Vorentwässerungsstufen mit gleicher Geschwindigkeit angetrieben sind. Hierdurch läßt sich eine besonders wirksame Vorentwässerung erzielen, indem sich beispielsweise der der Schwerkraft-Vorentwässerung zu unterziehende Schlamm in zwei Schichten aufteilen läßt, die wesentlich wirksamer entwässert werden. Beim praktischen Ausführungsbeispiel, bei welchem die Mitteldruckstufe beispielsweise in einer Schichthöhe von 60 mm beschickt wird und auf eine Schichthöhe von 30 mm entwässert wird, lassen sich die Vorentwässerungsstufen je mit einer Schichthöhe von 60 mm beschicken und geben am Ausgang je eine Schichthöhe von 30 mm ab, was der Einspeisungsschichthöhe der Mitteldruckstufe entspricht.

Im einzelnen kann die Erfindung dadurch weitergebildet werden, daß die Schwerkraft-Vorentwässerungsstufe aus einem horizontalen Filterband besteht, und daß in der Förderbahn des Filterbandes Schlammpflüge vorgesehen sind. Die Entwässerung erfolgt hierbei durch Gravitation und durch Auflockerung durch die Pflüge.

Nach einer vorteilhaften Weiterbildung nach der Erfindung ist vorgesehen, daß eine der vor der Hochdruckstufe angeordneten Entwässerungsstufen als Unterdruckstufe mit unter der Schlammschicht angeordneten Einrichtungen zur Erzeugung von Unterdruck ausgebildet ist.

Eine besonders vorteilhafte Ausführungsform nach der Erfindung kann dadurch geschaffen werden, daß die Mitteldruckstufe aus einem horizontalen Filterband und einem darüber umlaufenden Druckband besteht, wobei der Abstand zwischen dem Filterband und dem Druckband in Förderrichtung keilförmig abnimmt, daß der Keilraum zwischen dem Druckband und dem Filterband verstellbar ist, daß das Filterband mit dem Druckband eine allseitig geschlossene Schlammkammer bildet, wobei sich Filterband und Druckband synchron miteinander bewegen, daß das Druckband eine Vielzahl von aneinander anschließenden, kastenförmigen Formationen aufweist, welche die Schlammkammer in Einzelkammern unterteilen und daß die Formationen durch an beiden Seiten des Druckbands vorgesehene Randleisten und diese verbindende, im Abstand zueinander angeordnete Querschläge gebildet sind. Bei dieser Ausführungsform erfolgt daher die Entwässerung durch einstellbar steigenden Druck, wobei Filterband und Druckband die allseits geschlossene Schlammkammer bilden, welche durch die Querschläge in Einzelkammern unterteilt ist. Der Schlamm bewegt sich innerhalb der allseits geschlossenen Schlammkammer beim Entwässerungsvorgang synchron mit Filterband und Druckband. Der Preßdruck entsteht durch die keilförmige Zusammenführung von Druck- und Filterband.

In vorteilhafter Weise ist die Hochdruckstufe ebenfalls als allseitig geschlossene Schlammkammer ausgebildet.

Hierbei ist es bevorzugt, daß die Hochdruckstufe aus einem horizontalen Filterband, einer Druckmembrane mit seitlichen Dichtleisten und aus zwei die Stirnseiten verschließenden Schiebern besteht, und daß die Schieber als Flachschieber ausgebildet sind. Die Druckmembran wird hierbei durch den Druck der Druckplatten beaufschlagt. Die Entwässerung erfolgt in der Hochdruckstufe durch Zusammenpressen der Druckmembran mittels einstellbar steigendem Hochdruck bei stillstehendem Filterband und geschlossenen, stirnseitigen Schiebern. Das Filterband bewegt sich daher nur beim Füllen und Entleeren der Schlammkammer, wobei die stirnseitigen Schieber geöffnet sind und die Druckmembran einstellbar angehoben ist.

Bei einer vorteilhaften Weiterbildung nach der Erfindung ist die Druckmembran in einem Mittelbereich mit den beweglichen Druckplatten verbunden und die Dichtleisten sind in Richtung des Filterbandes federvorgespannt. Hierdurch ist in jedem Falle sichergestellt, daß auch bei geöffneter Hochdruckstufe oder am Beginn des Druckhubes der Schlamm nicht seitlich aus der Hochdruckstufe austreten kann.

Bei einer besonders bevorzugten Ausführungsform nach der Erfindung sind an der Berührungsfläche der Dichtleisten mit dem Filterband auswechselbare Verschleißteile vorgesehen, daß die Druckmembran als mit den Dichtleisten verbundene Gummidecke ausgebildet ist, und daß die die Dichtleisten beaufschlagenden Federn an den beweglichen Druckplatten abgestützt sind, derart, daß beim Druckhub gleichzeitig der Dichtdruck erhöht wird. Diese Ausführungsform ist deswegen vorteilhaft, weil ja die Dichtleisten auch beim Förderhub des Filterbandes, d.h. beim Füllen und Entleeren der Schlammkammer der Hochdruckstufe, mit dem Filterband in Berührung stehen.

Bei einer besonders bevorzugten Ausführungsform nach der Erfindung sind in der Hochdruckkammer Druckfühler vorgesehen, welche über eine Steuereinrichtung die Druckerhöhung in Abhängigkeit vom gemessenen Druck selbsttätig schalten. Hierdurch erfolgt einerseits die Druckerhöhung automatisch und andererseits ist diese Art der Steuerung des Hochdruckvorgangs wesentlich exakter als die bisher übliche Zeitschaltung, da die Veränderung des Drucks entsprechend den Schlammeigenschaften erfolgt. Mit anderen Worten bedeutet dieses, daß, da der Druck in der Hochdruckstufe entsprechend dem Entwässerungsgrad abfällt, die Druckfühler über die Steuereinrichtung den Druckaufbau dem jeweiligen Entwässerungsverhalten des Schlammes anpassen.

Eine besonders bevorzugte Ausführungsform nach der Erfindung kann dadurch geschaffen werden, daß die Vorentwässerungsstufe, die Mitteldruckstufen und die Hochdruckstufe als stapelbare, miteinander verbindbare Einheiten ausgebildet sind. Hierdurch läßt sich in konstruktiv einfacher Weise jeweils eine Pressenkombination herstellen, die den gestellten Anforderungen optimal entspricht.

Bei einer grundsätzlichen Abwandlung der bisher beschriebenen Ausführungsformen nach der Erfindung sind einige oder sämtliche Entwässerungsflächen kreisringförmig ausgebildet und bestehen aus übereinander angeordneten Kreisscheiben, welche um im wesentlichen senkrechte Drehachsen drehbar gelagert sind, daß die oberen Kreisscheiben als Vorentwässerungs- und Mitteldruckstufen ausgebildet sind, daß die untere Kreisscheibe als Hochdruckstufe dient, und daß mindestens zwischen der Mitteldruckstufe und der Hochdruckstufe ein Puffer- oder Stapelbehälter vorgesehen ist.

Im einzelnen ist es bevorzugt, daß der Puffer- oder Stapelbehälter über der unteren Kreisscheibe angeordnet ist, und daß der Boden des Stapelbehälters durch die der Hochdruckzone zugehörige Entwässerungsfläche gebildet ist, daß die Hochdruckstufe durch eine Vielzahl von nebeneinander angeordneten, sich radial erstreckenden Segmente aufgebaut ist, welche mit der durchgehenden Druckmembran verbunden sind. daß jedem Segment mindestens ein Hochdruckerzeuger zugeordnet ist, daß eine obere und eine untere, insgesamt jeweils kreisringförmige Druckplattenanordnung vorgesehen ist, wobei der Abstand zwischen den beiden Druckplattenanordnungen wahlweise veränderbar ist, daß die untere Druckplatte eine mit einem Drehantrieb versehene Kreisscheibe aufweist, und daß jedes Segment eine obere Druckplatte aufweist und die obere Druckplatte unabhängig von der Lage benachbarter oberer Druckplatten anhebbar und absenkbar ist.

Bei einer Weiterbildung nach der Erfindung ist es vorgesehen, daß auf der unteren Druckplattenanordnung eine mit Entwässerungsstrukturen versehene, insgesamt kreisringförmige Entwässerungsplattenanordnung angeordnet ist, daß auf der Entwässerungsplattenanordnung ein kreisringförmiges Filterband aufliegt, und daß die Entwässerungsplattenanordnung als elastische Platte, insbesondere als Platte aus Gummi oder Kunststoff, mit senkrechten Durchgangsöffnungen und waagerecht verlaufenden Entwässerungskanälen ausgebildet ist. Bei einer alternativen Ausführungsform wird die Platte als Kunststoffgitter lediglich mit senkrechten Durchgangsöffnungen ausgebildet.

Eine besonders bevorzugte Ausführungsform mit den kreisförmigen Filterflächen kann dadurch geschaffen werden, daß drei übereinander angeordnete Kreisscheiben mit Filtereinrichtungen vorgesehen sind, von denen die oberste eine Schwerkraftentwässerungsstufe, die mittlere eine als Unterdruckstufe ausgebildete Mitteldruckstufe und die unterste die Hochdruckstufe bildet, daß die oberen Kreisscheiben ebenfalls mit kreisringförmigen Entwässerungsplatten mit senkrechten Durchgangsöffnungen versehen sind, daß die Drehachsen der Kreisscheiben gegeneinander seitlich versetzt angeordnet sind, daß die Kreisscheiben je eine äußere umlaufende, ringförmige Stirnfläche aufweisen und mittels eines hieran angreifenden Reibradantriebes antreibbar sind, und daß an beiden Enden der Hochdruckstufe Schieber vorgesehen sind, welche die allseitig geschlossene Schlammkam mer an ihren Enden abschließen. Diese Ausführungsform wird deswegen bevorzugt, weil das Aufbringen von Unterdruck konstruktiv einfacher zu lösen ist als das Aufbringen von positiv ausgeübtem Druck, soweit sich eine Filterfläche auf einer Kreisbahn bewegt. Durch die seitliche Versetzung der Drehachsen kann in mechanisch besonders einfacher Weise der Schlamm von einer Entwässerungsstufe zur nächsten übergeben werden.

Die Hochdruckerzeuger sind bei sämtlichen Ausführungsformen bevorzugt als hydraulische Druckzylinder ausgebildet.

Konstruktiv ist es vorteilhaft, daß die Segmente durch geschlossene Rahmen gebildet sind, wobei sich die hydraulischen Druckzylinder einerseits am oberen Schenkel der Rahmen und andererseits an der oberen Druckplatte abstützen, und daß zwischen dem oberen Schenkel und der oberen Druckplatte wirksame Federn zum Anheben der Druckplatte vorgesehen sind.

Im einzelnen ist es vorteilhaft, die Druckmembran als kreisringsegmentförmigen Bauteil mit Dichtleisten an den radialen Kanten auszubilden, wobei die Schieber an den Enden der durch das Kreisringsegment definierten Hochdruckzone angeordnet sind.

Bei sämtlichen Ausführungsformen ist es für die Hochdruckzone der Vorrichtung nach der Erfindung bevorzugt, daß die beweglichen Druckplatten quer zur Bewegungsrichtung des Schlammvolumens einen vorstehenden, im wesentlichen zur Filterfläche parallelen Mittelbereich aufweisen, welcher an den beiden Seiten in nach oben verlaufende schräge Bereiche übergeht, daß die Druckmembran an den Mittelbereich befestigt ist, und daß der Mittelbereich etwa die Hälfte bis vier Fünftel der Gesamtbreite der Druckplatten beträgt. Diese besondere Form der Druckplatten führt zu einem besonders vorteilhaften Druckverlauf über die Breite des Schlammkammervolumens.

Im einzelnen ist es ferner bevorzugt, daß die untere Kreisscheibe der Hochdruckstufe auf abgefederten Rollen auf den un teren Schenkeln der Rahmen gelagert ist.

Eine konstruktiv interessante Abwandlung der Vorrichtung nach der Erfindung kann dadurch geschaffen werden, daß die Schwerkraft-Vorentwässerungsstufe und die Vakuum-Mitteldruckstufe rund ausgebildet sind, während die Hochdruckstufe langgestreckt mit einem horizontalen umlaufenden Filterband ausgebildet ist. Diese Ausführungsform ist konstruktiv deswegen so interessant, weil die gradlinige Ausgestaltung der Hochdruckstufe einfacher ist als die kreisringförmige Konstruktion.

Bei den oben beschriebenen Ausführungsformen nach der Erfindung hat es sich als besonders vorteilhaft herausgestellt, daß der Boden des Puffer- oder Stapelbehälters durch ein getrennt angetriebenes Filterband gebildet ist, daß die Schwerkraft-Vorentwässerungsstufe und die Vakuum-Mitteldruckstufe in einer Ebene nebeneinander angeordnet sind, daß mindestens die Keilstufe mit Filtratsammelwannen versehen ist, und daß die die Dichtleisten der Druckmembran beaufschlagenden Federn in ihrer Druckkraft verstellbar ausgebildet sind. Durch diese Maßnahme läßt sich eine bessere Steuerung der Einspeisung des Schlamms in die Hochdruckzone erreichen, die Bauhöhe der Gesamtvorrichtung vorteilhaft verringern und es läßt sich das aus dem Schlamm herausgepreßte Filtrat in einfacher Weise seitlich aus der Vorrichtung herausführen.

Im einzelnen kann die kreisringförmige Ausführungsform der erfindungsgemäßen Vorrichtung dadurch weiter ausgestaltet werden, daß die obere Kreisscheibe hälftig aus einer Schwerkraft-Entwässerungsstufe und hälftig aus einer Vakuum-Entwässerungsstufe besteht, und daß die Einrichtungen zur Erzeugung von Unterdruck mit der Kreisscheibe umlaufend ausgebildet sind. Hierdurch kann eine der Kreisscheiben eingespart und die Bauhöhe der Gesamtvorrichtung verringert werden.

Wegen des hohen Wirkungsgrades der Entwässerung, insbesondere bei doppelt ausgebildeter Schwerkraft-Vorentwässerung, ist eine Verwendung der Kombination aus der Vorentwässerungsstufe und der Mitteldruckstufe als Siebbandpresse möglich und vorteilhaft.

Im folgenden wird die Erfindung anhand von in den Zeichnungen beispielhaft veranschaulichten Ausführungsformen näher erläutert. Es zeigt:

Fig. 1 eine stark schematische, geschnittene Seitenansicht einer ersten Ausführungsform der erfindungsgemäßen Vorrichtung;

Fig. 2 eine teilweise in verschiedenen Ebenen geschnittene Draufsicht der Vorrichtung gemäß Fig. 1;

Fig. 3 eine Schnittansicht durch die Vorrichtung gemäß Fig. 1 längs der Linie III-III;

Fig. 4 eine Schnittansicht einer zweiten Ausführungsform der Vorrichtung nach der Erfindung;

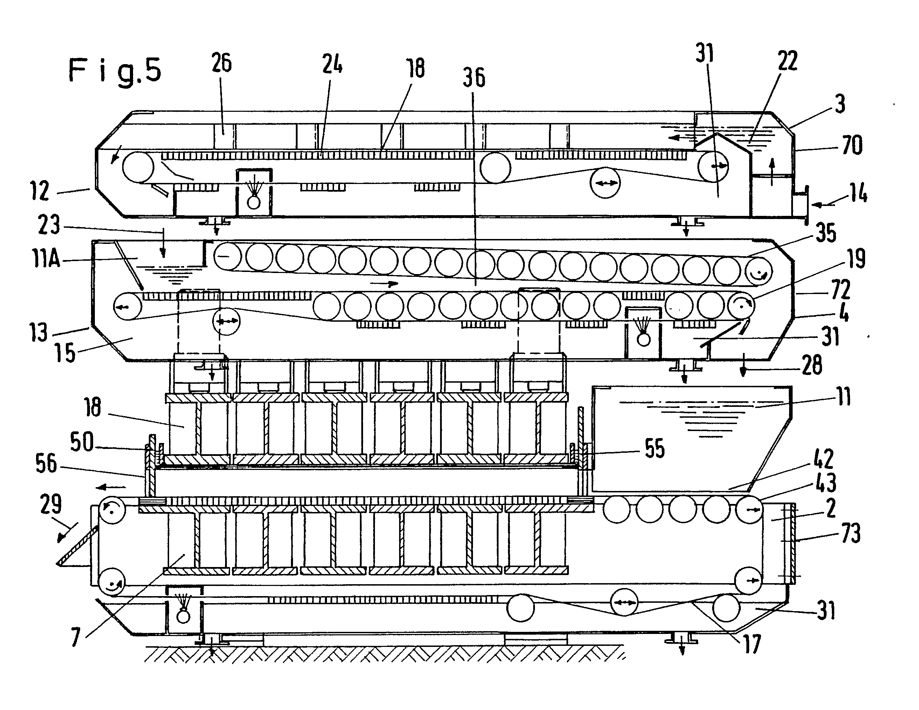

Fig. 5 eine Fig. 4 entsprechende Ansicht einer dritten Ausführungsform nach der Erfindung;

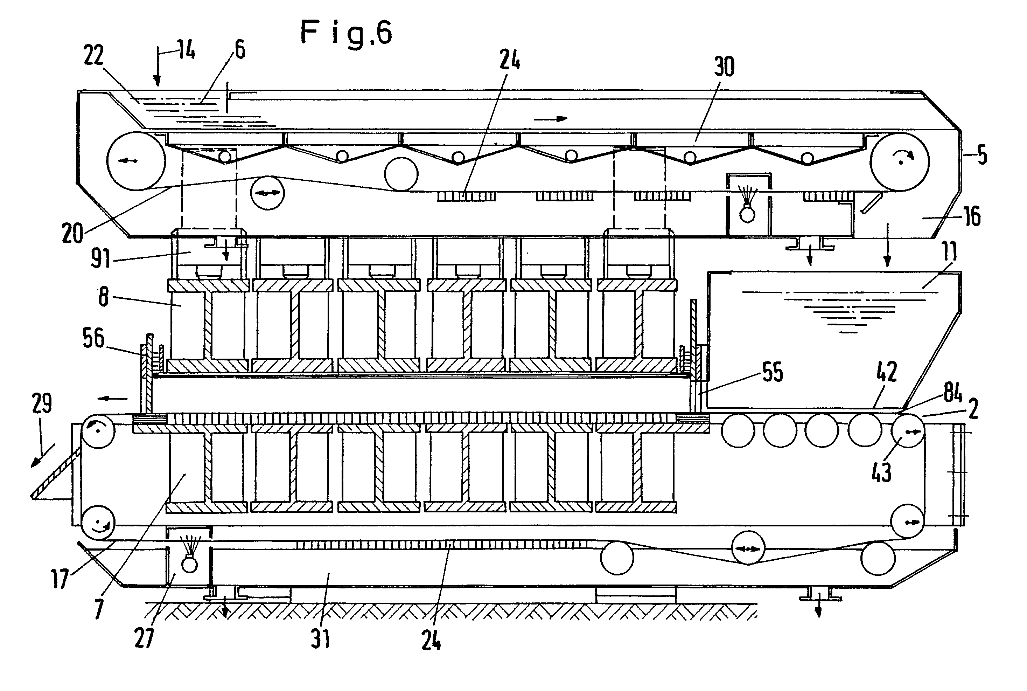

Fig. 6 eine Fig. 5 entsprechende Ansicht einer vierten Ausführungsform nach der Erfindung;

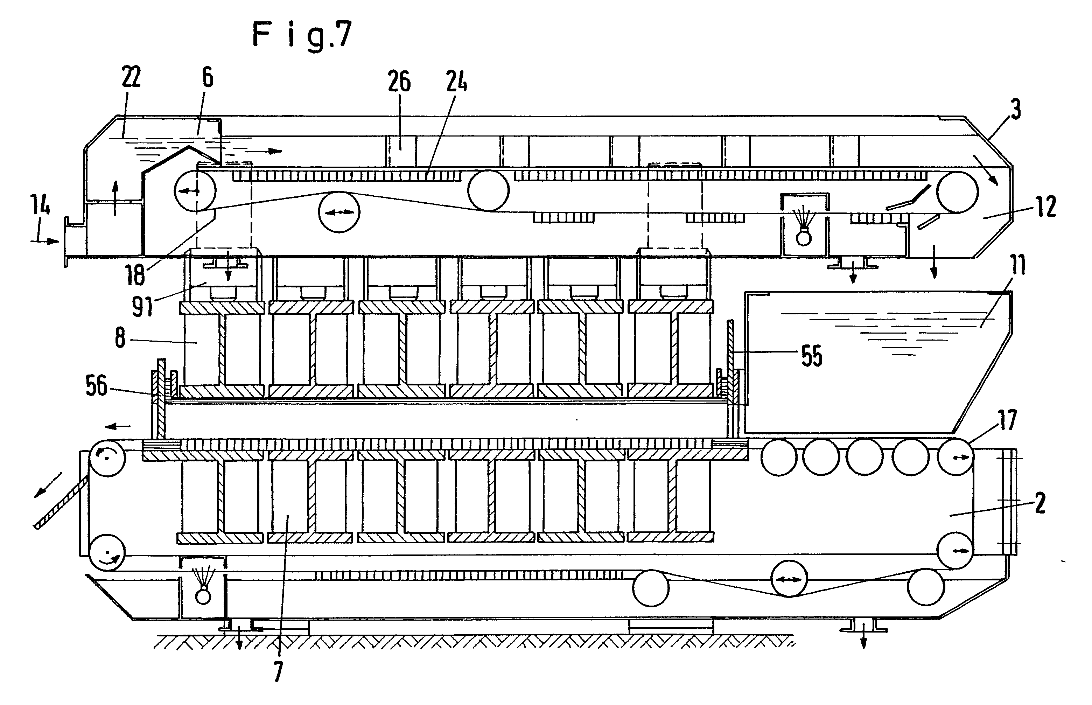

Fig. 7 eine Fig. 6 entsprechende Ansicht einer fünften Ausführungsform nach der Erfindung;

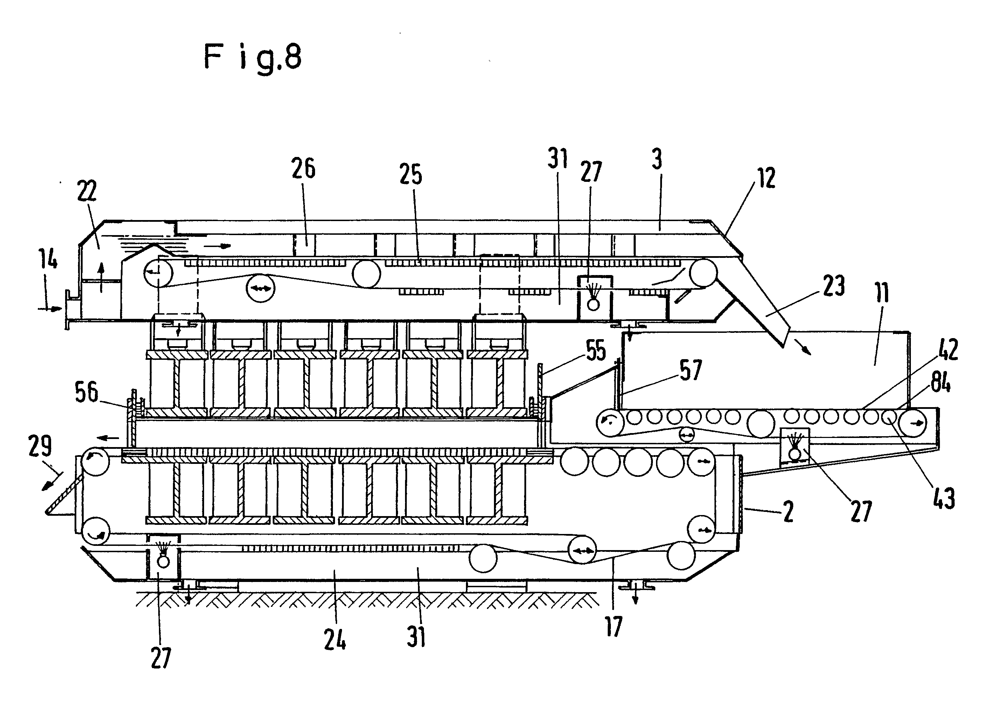

Fig. 8 eine Fig. 7 entsprechende Schnittansicht einer sechsten Ausführungsform nach der Erfindung;

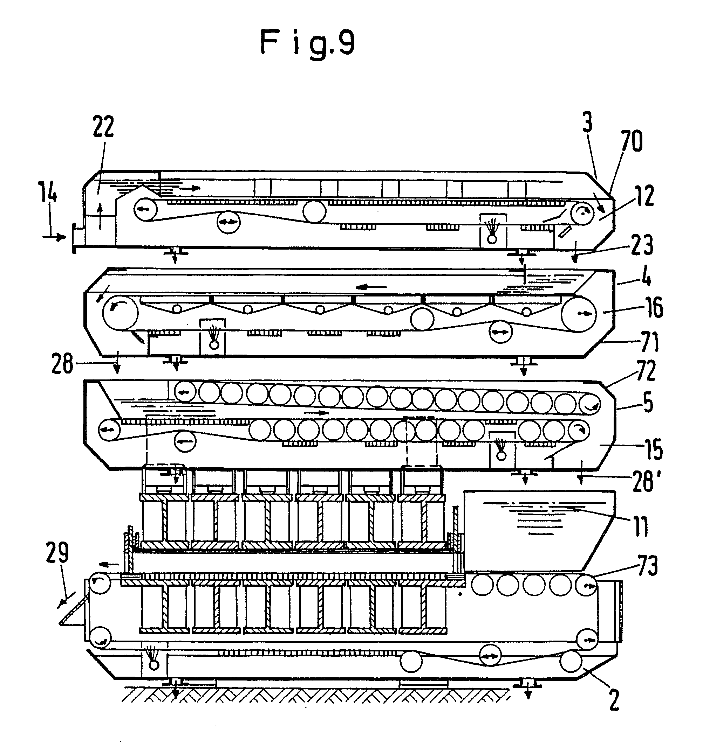

Fig. 9 eine Fig. 8 entsprechende Schnittansicht einer siebten Ausführungsform nach der Erfindung, welche den baukastenähnlichen Aufbau aus Einzelelementen veranschaulicht;

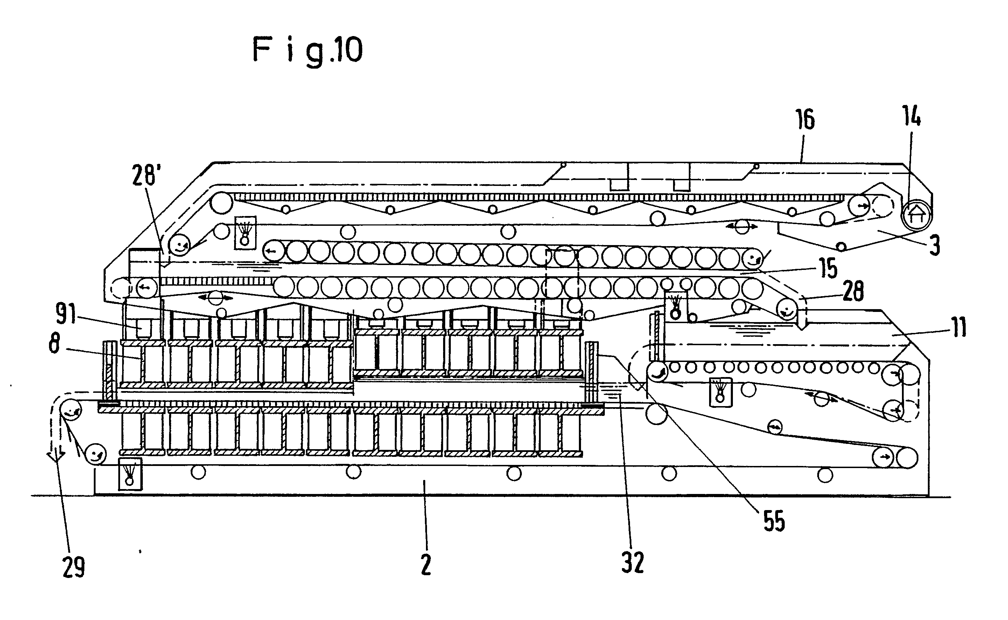

Fig. 10 eine Schnittansicht einer weiteren Ausführungsform nach der Erfindung;

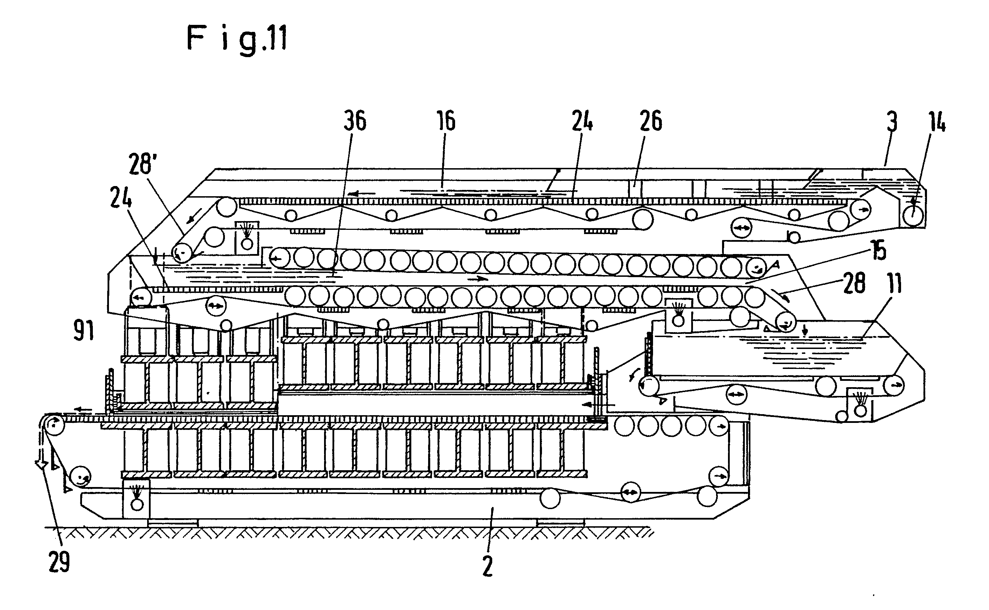

Fig. 11 eine Abwandlung der in Fig. 10 veranschaulichten Ausführungsform nach der Erfindung;

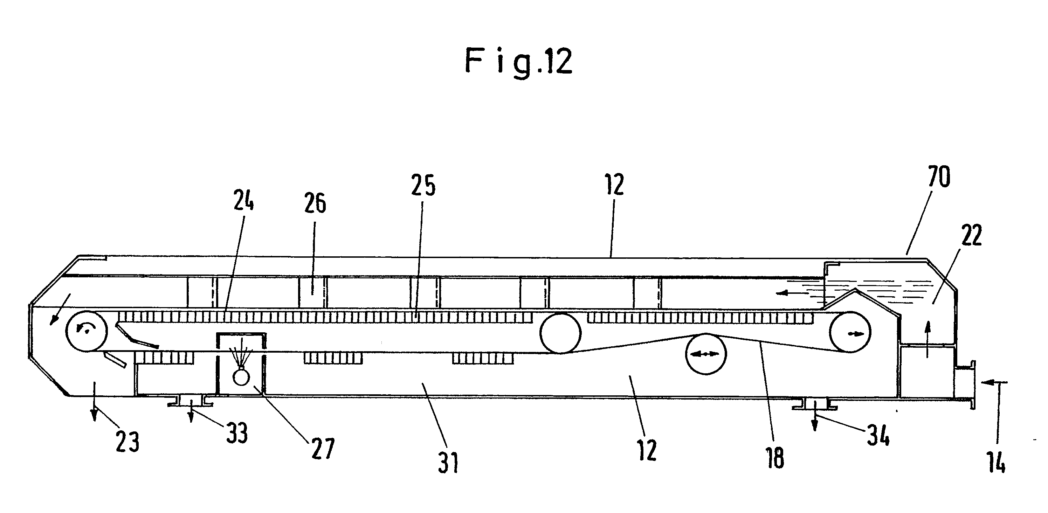

Fig. 12 eine Schnittansicht der Schwerkraft-Vorentwässerungsstufe;

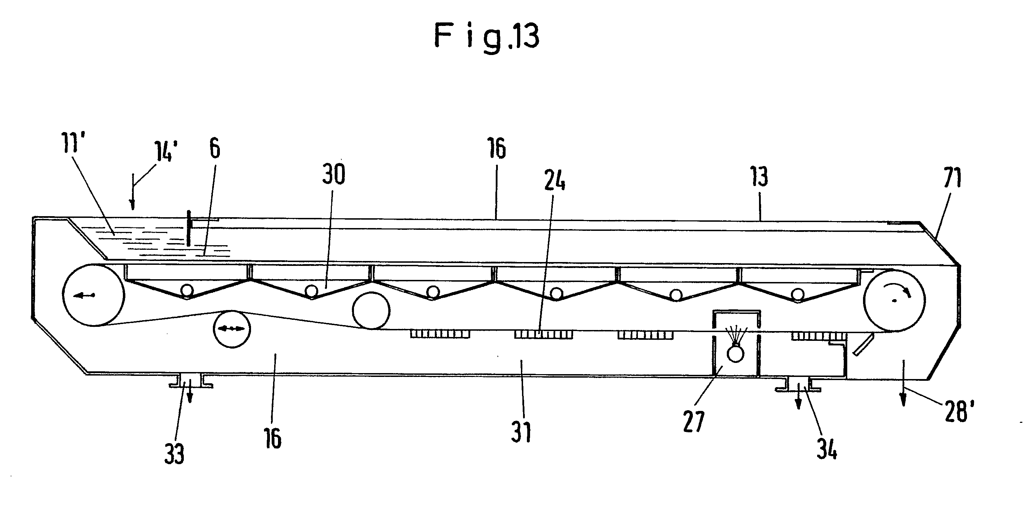

Fig. 13 eine seitliche Schnittansicht der Unterdruck-Mitteldruckstufe;

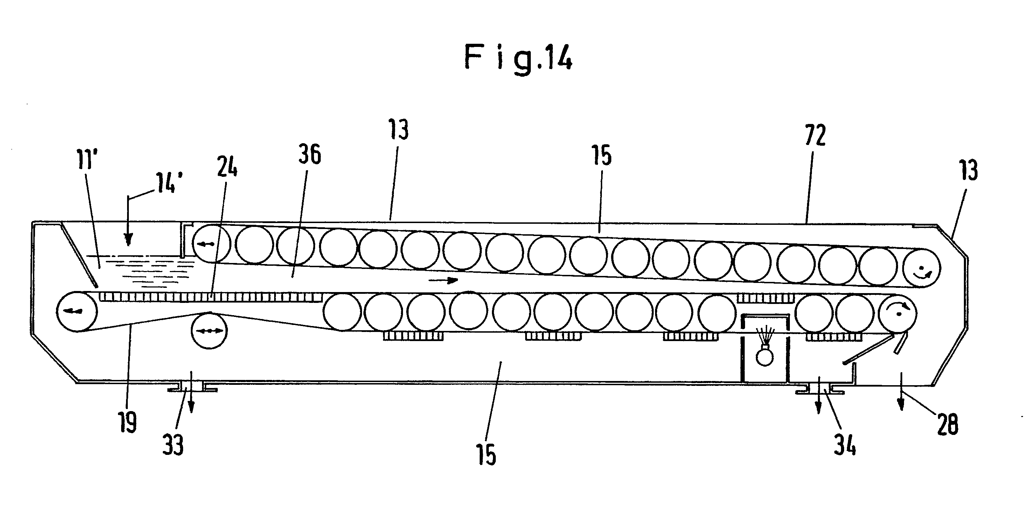

Fig. 14 eine Fig. 13 entsprechende Schnittansicht der Mitteldruckstufe, welche hier als Keilstufe ausgebildet ist;

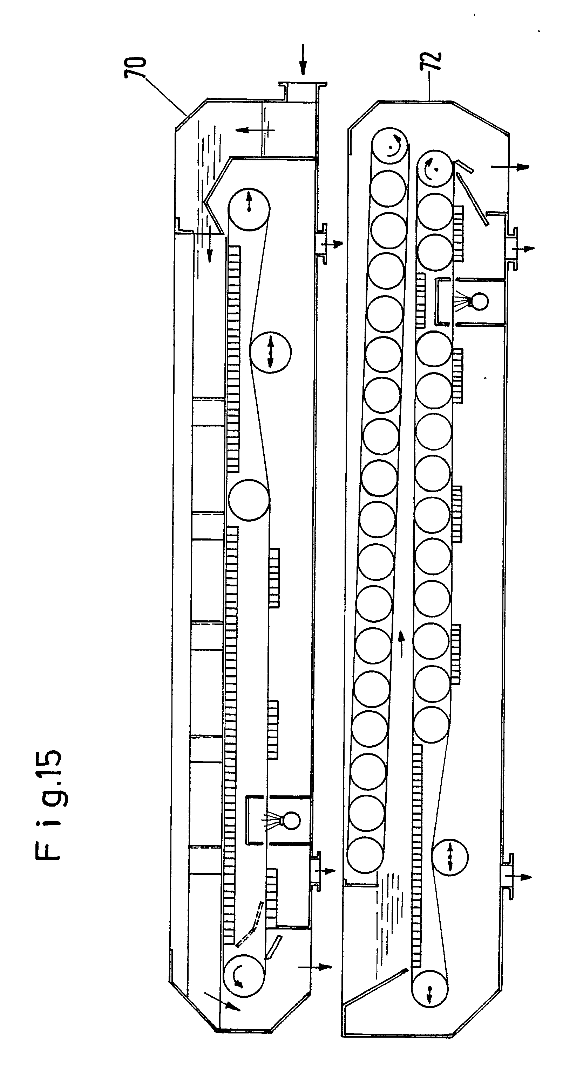

Fig. 15 die Kombination der Vorentwässerungsstufe gemäß Fig. 12 mit der Keilstufe gemäß Fig. 14 in einer seitlichen Schnittansicht;

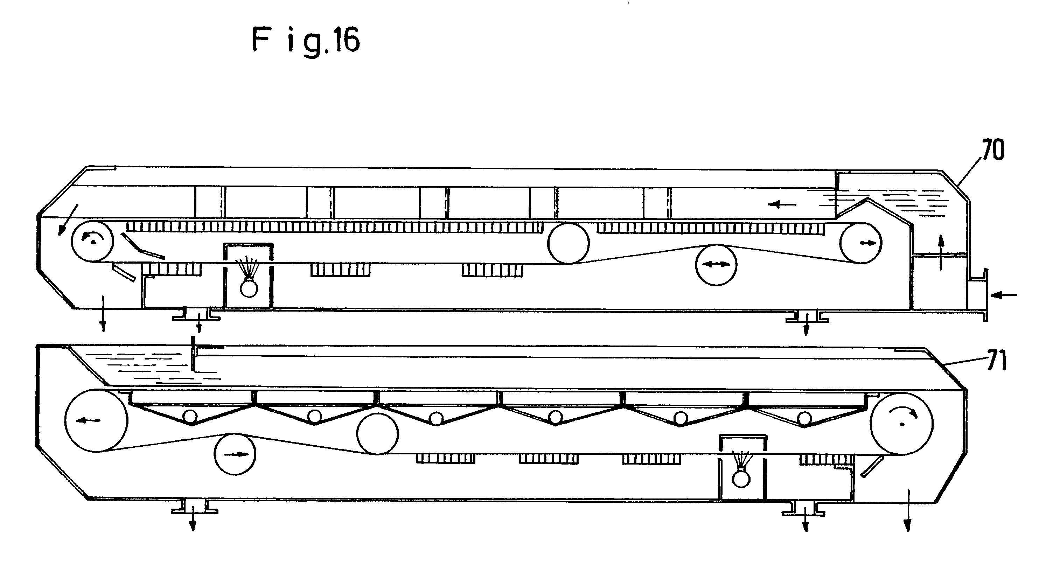

Fig. 16 eine seitliche Schnittansicht der Kombination der Schwerkraft-Vorentwässerungsstufe gemäß Fig. 12 mit der Unterdruck-Mitteldruckstufe gemäß Fig. 13;

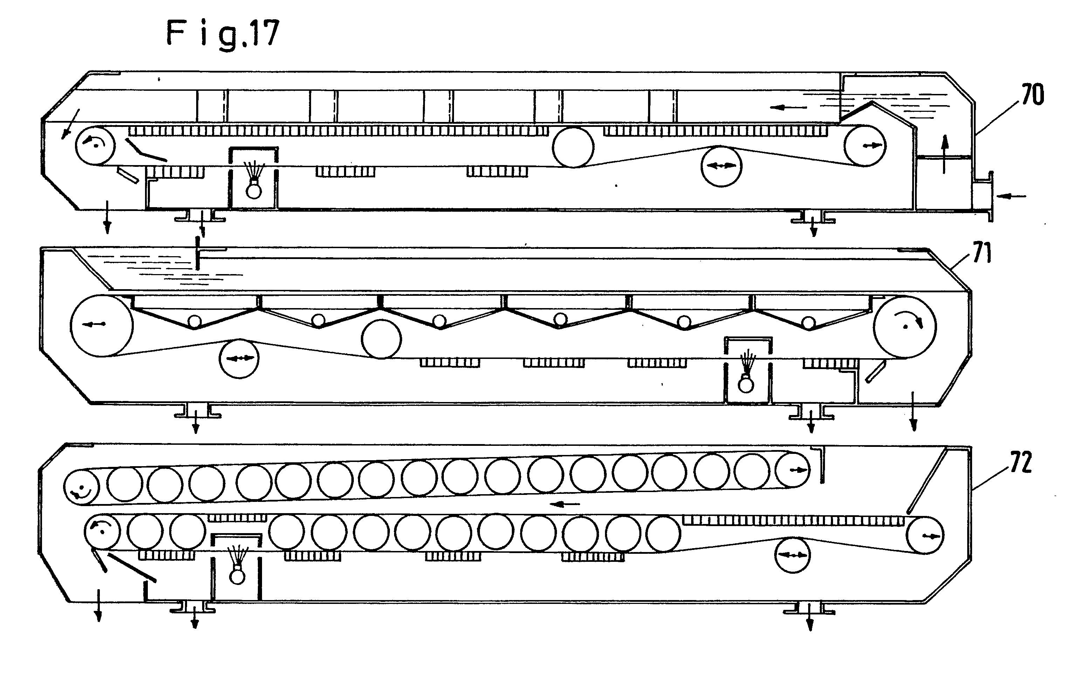

Fig. 17 eine seitliche Schnittansicht einer Kombination aus einer Schwerkraft-Vorentwässerungsstufe gemäß Fig. 12 mit einer Mitteldruck-Unterdruckstufe gemäß Fig. 13 und einer Keilstufe gemäß Fig. 14;

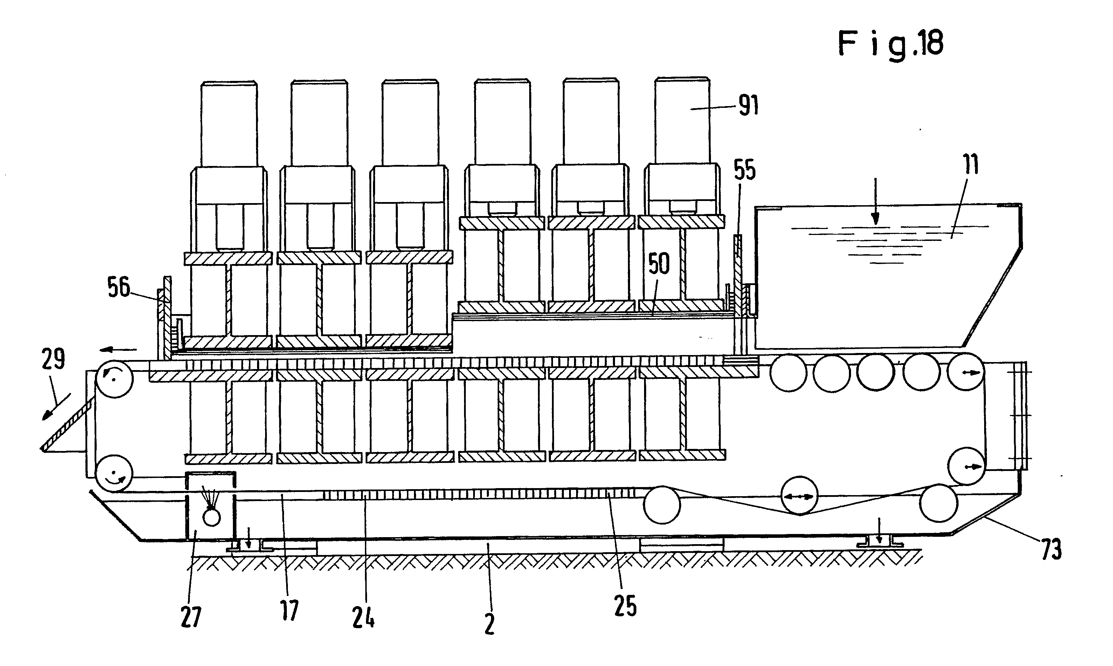

Fig. 18 eine seitliche Schnittansicht einer Hochdruckstufe, wie sie mit jeder der Vorentwässerungsstufen und der Unterkombinationen gemäß Fig. 12 bis 17 kombiniert werden kann;

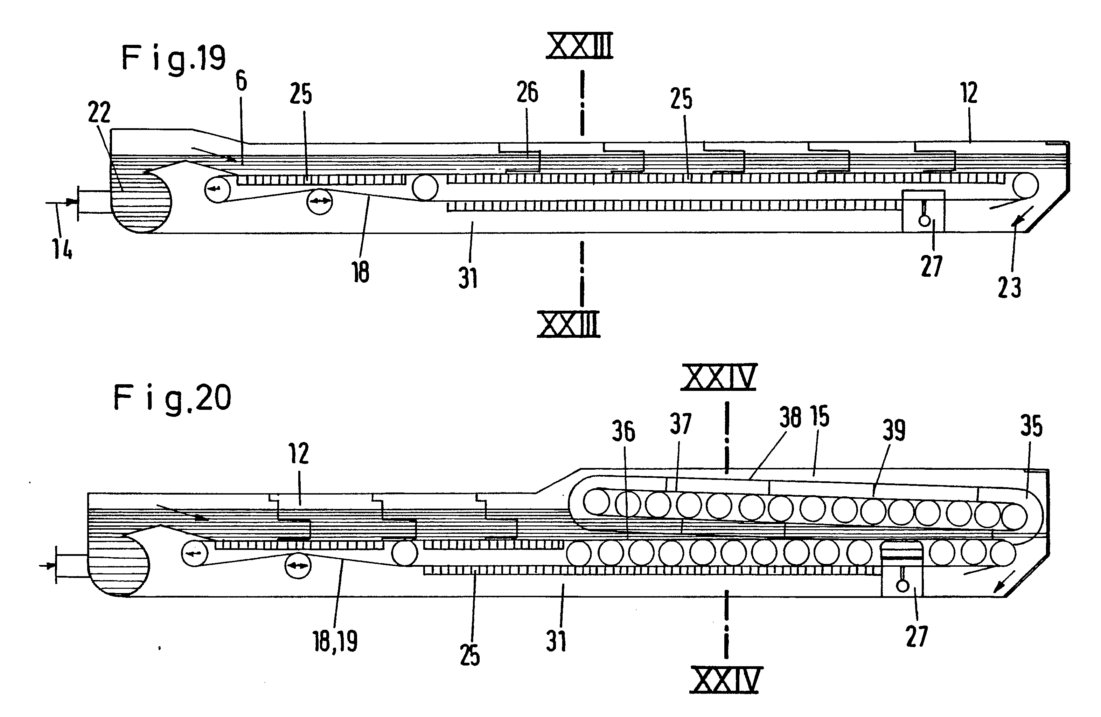

Fig. 19 eine seitliche Schnittansicht einer abgewandelten Vorentwässerungsstufe gemäß Fig. 12;

Fig. 20 eine seitliche Schnittansicht einer mit einer Keilstufe kombinierten Vorentwässerungsstufe in einer Ebene;

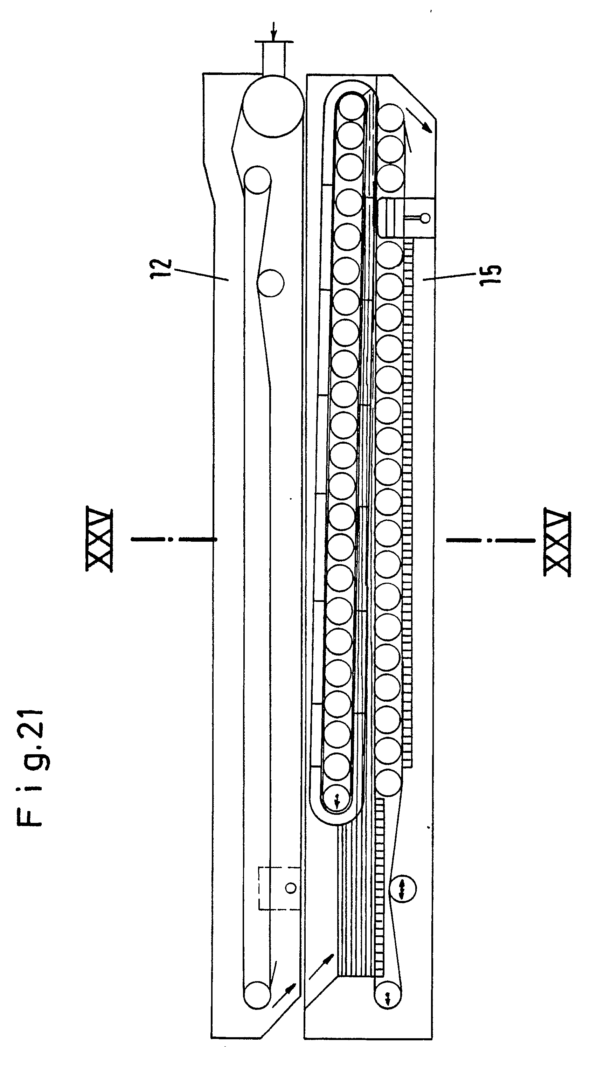

Fig. 21 eine seitliche Schnittansicht einer Schwerkraft-Vorentwässerungsstufe kombiniert mit einer darunterliegenden Keil,stufe als Mitteldruckstufe;

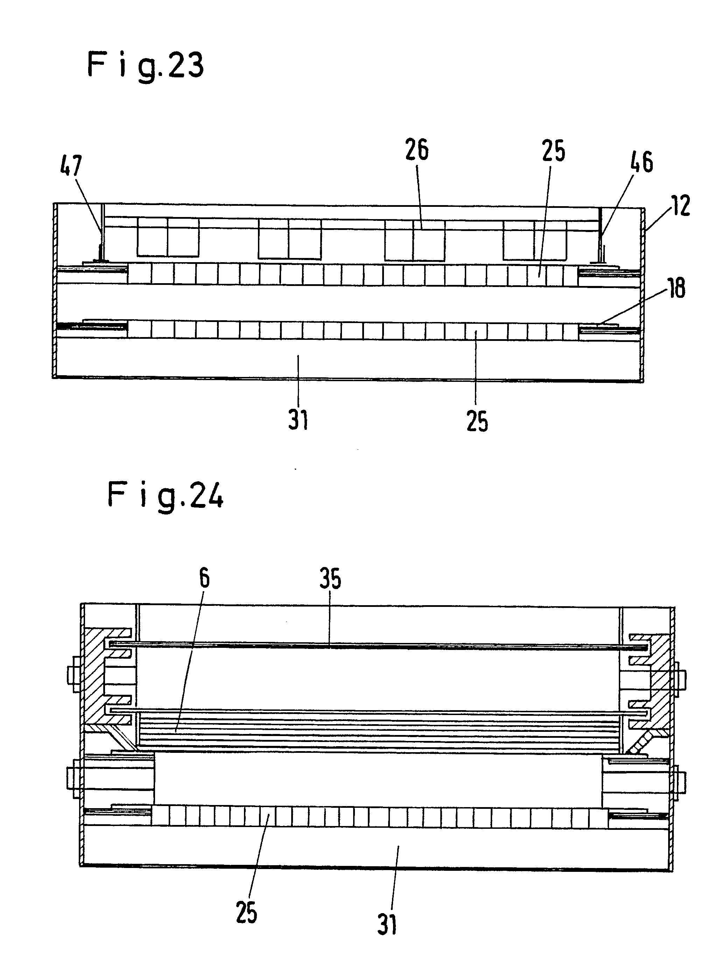

Fig. 23 eine Schnittansicht längs der Linie XXIII-XXIII in Fig. 19;

Fig. 24 eine Schnittansicht längs der Linie XXIV-XXIV in Fig. 20;

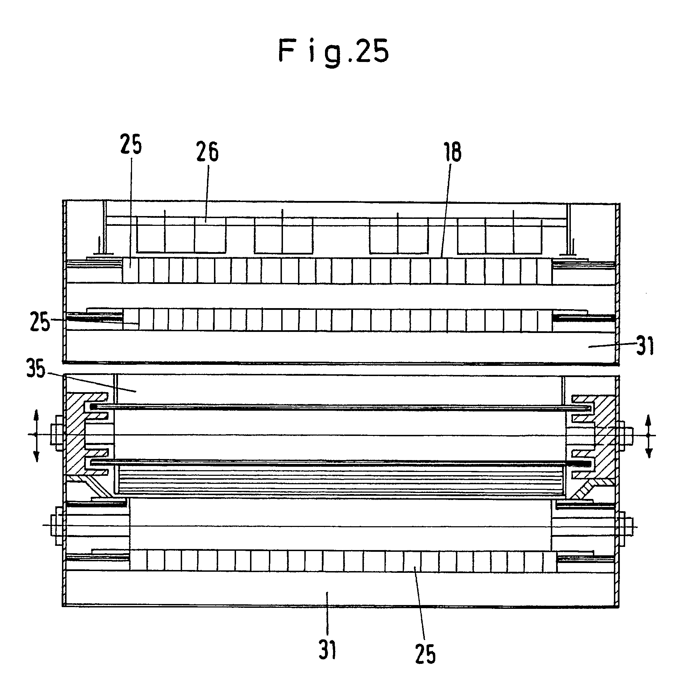

Fig. 25 eine Schnittansicht längs der Linie XXV-XXV in Fig. 21;

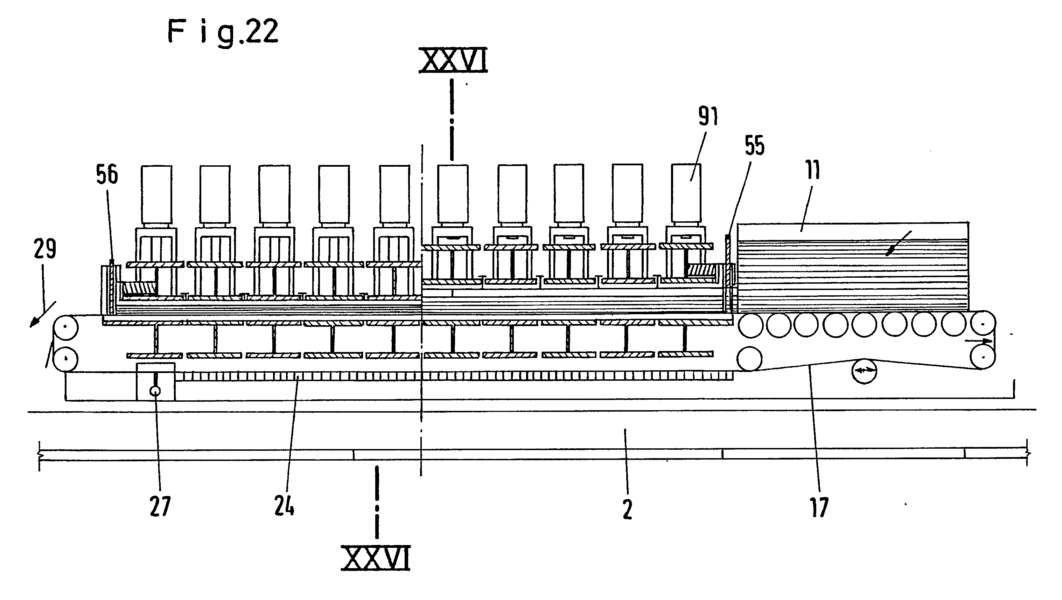

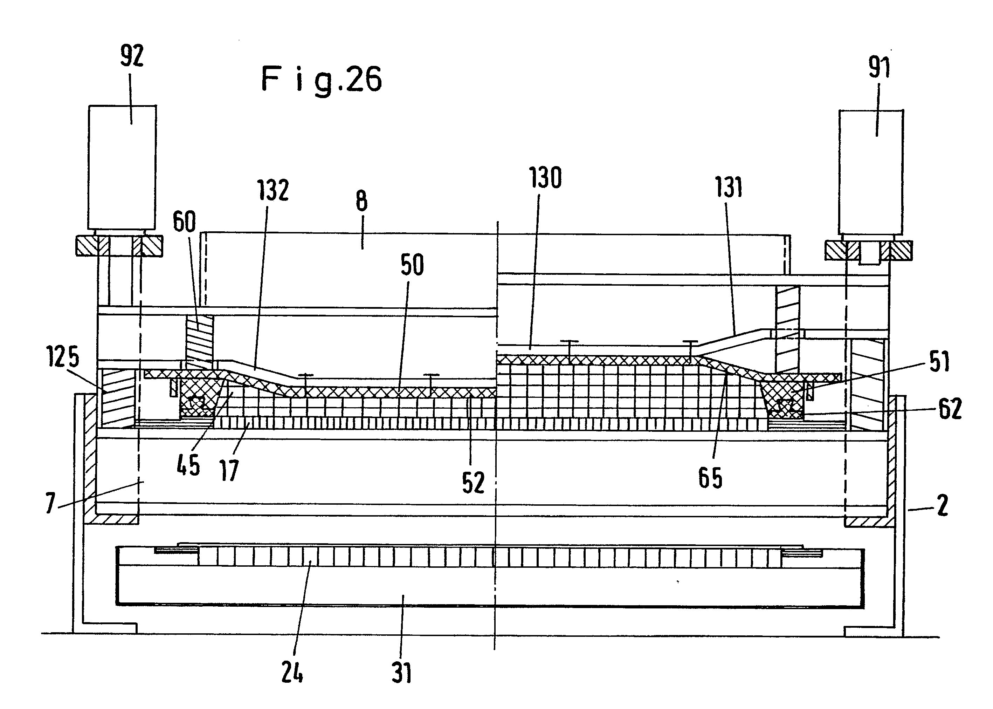

Fig. 26 eine Schnittansicht längs der Linie XXVI-XXVI in Fig. 22, welche zwei Betriebszustände der Hochdruckstufe längs einer senkrechten Mittellinie gespiegelt zeigt;

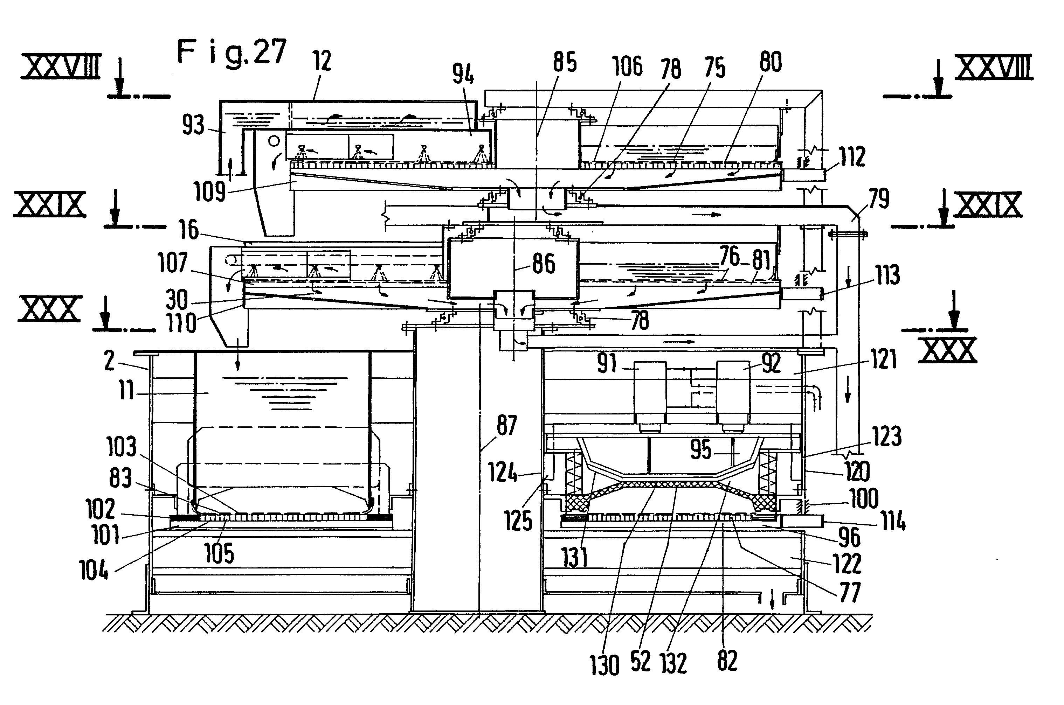

Fig. 27 eine schematische Schnittansicht einer grundsätzlich abgewandelten Ausführungsform der Vorrichtung nach der Erfindung;

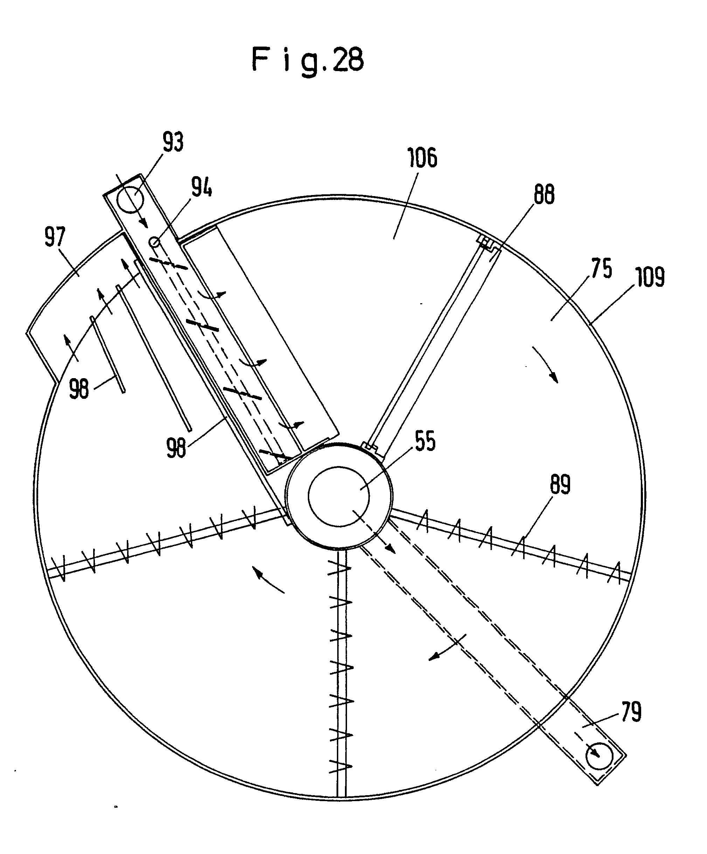

Fig. 28 eine Schnittansicht in der Ebene XXVIII-XXVIII in Fig. 27;

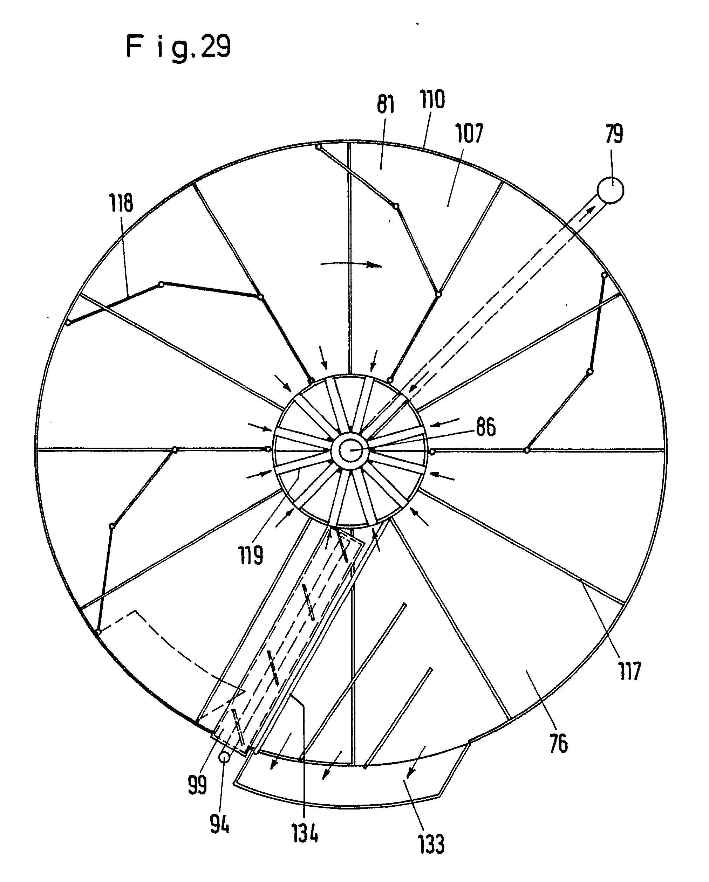

Fig. 29 eine Schnittansicht in der Ebene XXIX-XXIX in Fig. 27;

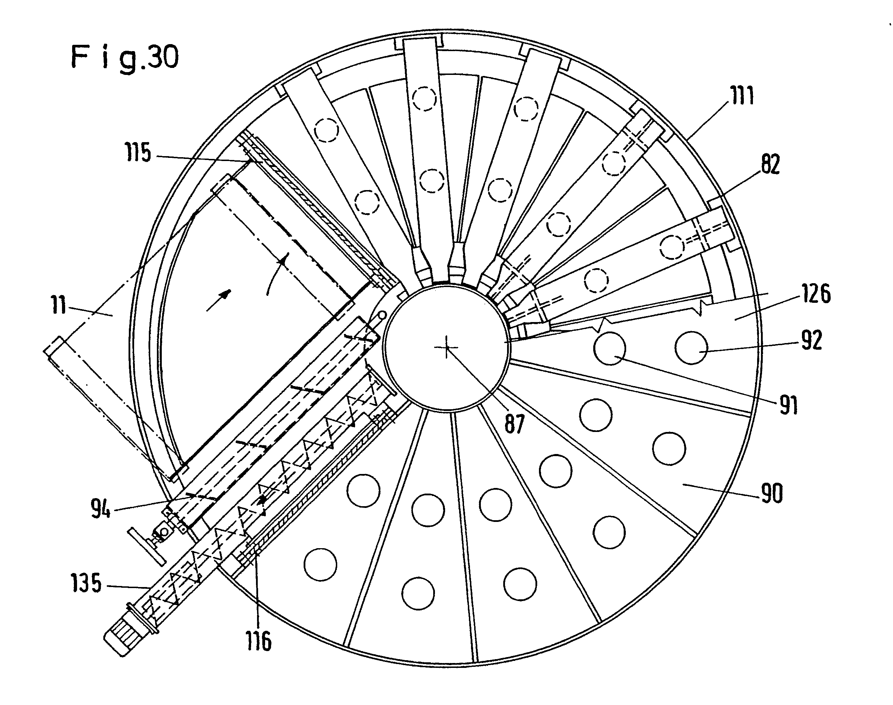

Fig. 30 eine Schnittansicht in der Ebene XXX-XXX in Fig. 27;

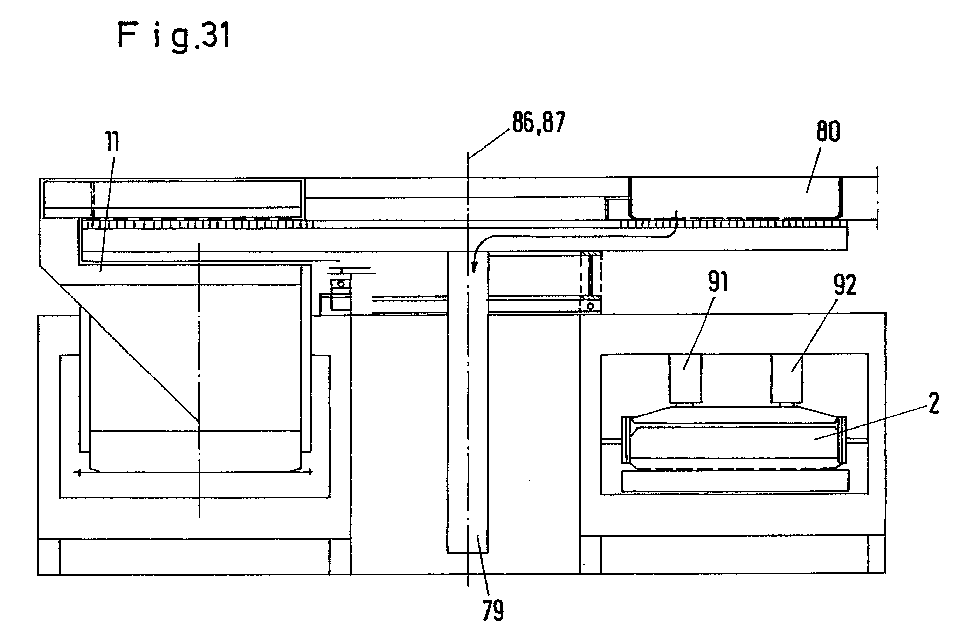

Fig. 31 eine Fig. 27 entsprechende Schnittansicht einer abgewandelten Ausführungsform;

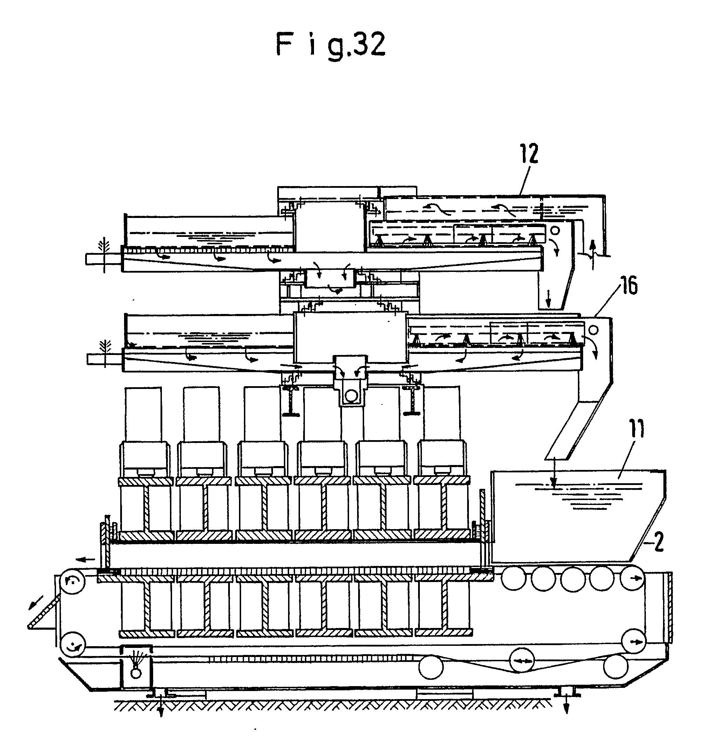

Fig. 32 eine Schnittansicht einer Ausführungsform, in welcher die Vorentwässerungsstufe gemäß Fig. 27 mit einer Hochdruckstufe gemäß Fig. 18 kombiniert ist;

Fig. 33 eine Fig. 1 entsprechende Schnittansicht einer Ausführungsform, bei welcher die Stapeleinrichtung durch eine weitere Hochdruckstufe gebildet ist;

Fig. 34 eine Fig. 1 entsprechende Schnittansicht einer Ausführungsform, bei welcher die Stapeleinrichtung durch ein Stapelband gebildet ist; und

Fig. 35 eine Fig. 1 entsprechende Schnittansicht, bei welcher die Stapeleinrichtung durch einen Vorratsbunker gebildet ist.

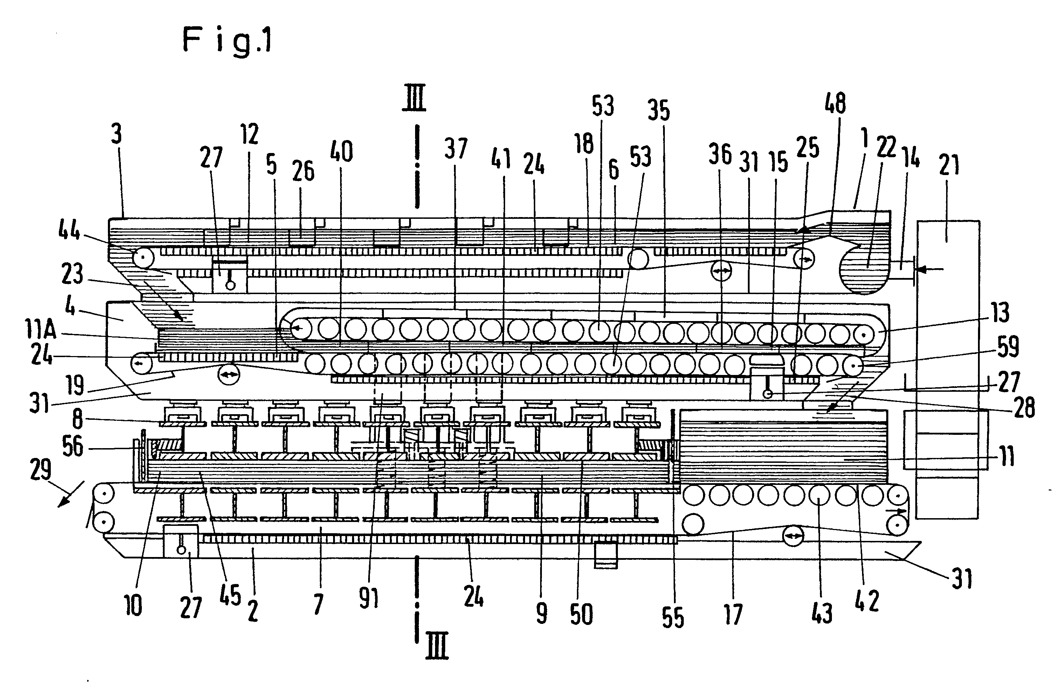

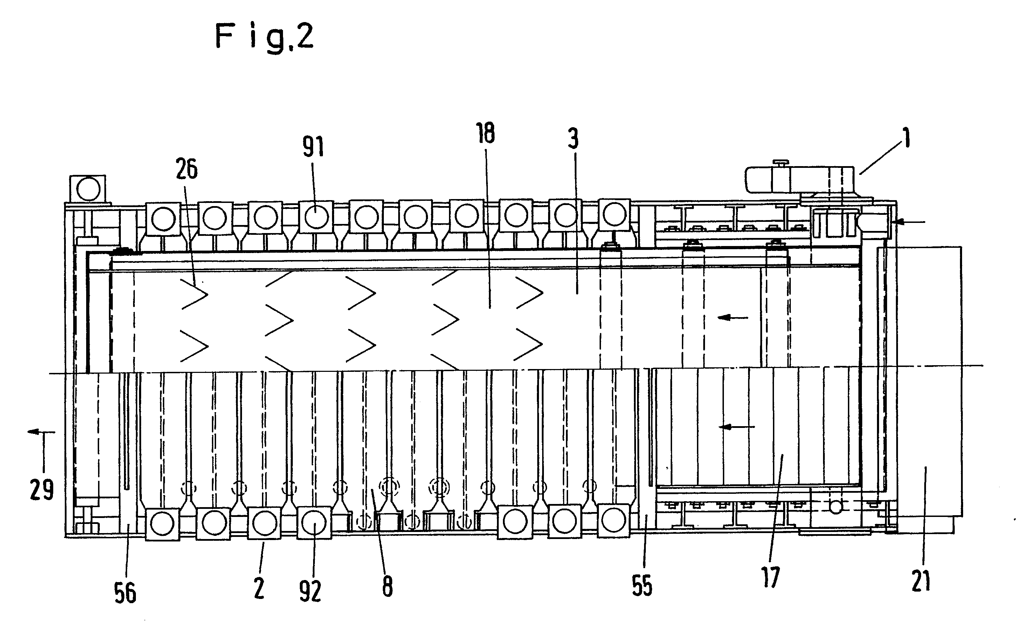

Die in Fig. 1 bis 3 schematisch veranschaulichte, allgemein mit 1 bezeichnete Vorrichtung nach der Erfindung zum Entwässern von Schlamm und ähnlichen Substanzen umfaßt nach der veranschaulichten Ausführungsform eine Hochdruckstufe 2, welcher zwei Vorentwässerungsstufen 3 und 4 zugeordnet sind. Bei den Vorentwässerungsstufen handelt es sich um eine Schwerkraftentwässerungsstufe 3 und eine Mitteldruckstufe 4 und nach Durchlaufen der Vorentässerungsstufen 3 und 4 wird der Schlamm in ein sich an Druckplatten 7,8 intermittierend vorbeibewegendes, geschlossenes Schlammkammervolumen 9 eingespeist. Das Schlammkammervolumen 9 wird zwischen den stationären Druckplatten 7, 8 einem Hochdruck ausgesetzt und der erhaltene Schlammkuchen 10 untermittierend ausgetragen.

Bei der Ausführungsform gemäß Fig. 1 weist jede der Entwässerungsstufen 2 bis 4 ein eigenes umlaufendes Filterband 17, 18, 19 auf, worauf weiter unten noch Bezug genommen wird.

Nach Verlassen einer Vorbehandlungseinrichtung 21 wird der Schlamm über die Schlammzuführung 14 in einen Misch- und Reaktionsraum 22 eingeleitet, von wo er in die Vorentwässerungseinrichtung 3 gelangt.

Die Vorentwässerungseinrichtung 3 ist bei dem veranschaulichten Ausführungsbeispiel als Schwerkraftentwässerungsstufe ausgebildet, wobei der Schlamm nach Verlassen des Misch- und Reaktionsraums auf ein kontinuierlich umlaufendes Filterband 18 aufgegeben wird. Das Filterband 18 läuft, wie veranschaulicht, über Entwässerungsplatten 24, welche bevorzugt als Kunststoffgitter ausgebildet sind. In der Förderbahn des im wesentlichen horizontal verlaufenden Filterbandes 18 der Schwerkraft-Vorentwässerungsstufe 12 sind Schlammpflüge 26 vorgesehen, die dazu dienen, den Schwerkraft-Entwässerungsvorgang zu unterstützen.

Bei dem veranschaulichten Ausführungsbeispiel ist die an die Vorentwässerungsstufe 4 bzw. 12 anschließende Entwässerungstufe als Mitteldruckstufe 13 ausgebildet, in welcher der Schlamm einem mittleren Druck ausgesetzt ist.

Beim Ausführungsbeispiel ist zwischen dem Schlammabwurf 23 der Schwerkraft-Vorentwässerungsstufe 12 und der eigentlichen Mitteldruckstufe 13 ein erster Puffer- oder Stapelbehälter 11A vorgesehen, welcher weiter unten in seiner Funktion noch näher erläutert wird. Der Boden des ersten Puffer- oder Stapelbehälters 11A ist durch das kontinuierlich umlaufende Filterband 19 der Mitteldruckstufe 13 gebildet , welches in diesem Bereich ebenfalls auf Entwässerungsplatten 24 in Form von Kunststoffgittern 25 ausgebildet ist.

Wie gezeigt, ist die Mitteldruckstufe 13 als Keilstufe 15 ausgebildet, indem ein weiteres umlaufendes Band vorgesehen ist, welches als Druckband 35 ausgebildet ist. Das Druckband 35 bildet zusammen mit dem umlaufenden Filterband 18 einen Keilraum 36, in welchem der Schlamm 6 einem in Förderrichtung kontinuierlich steigenden Druck ausgesetzt wird.

Wie gezeigt, ist das Druckband 35 mit kastenförmigen Formationen 37 versehen, welche aus durchgehenden Randleisten 38 und diese verbindenden Querstegen 39 bestehen.

Das Druckband 35 mit den kastenförmigen Formationen 37 bildet eine erste geschlossene Schlammkammer 40 mittleren Drucks, welche durch die kastenförmigen Formationen 41 in Einzelkammer unterteilt ist.

In der Keilstufe 15 läuft das obenliegende Druckband 35 mit den kastenförmigen Formationen 38, wie veranschaulicht, entgegen dem Uhrzeigersinn auf das Filterband 19 auf, so daß der Schlamm portionsweise durch den Keilraum 36 gefördert und als geschlossenes Volumen einem stetig steigen den Druck ausgesetzt wird.

Am Ausgang 28 der Keilstufe 15 wird der Schlamm 6 in einen Puffer- oder Stapelbehälter 11 übergeben, welcher zwischen der Hochdruckstufe und der Keilstufe zwischengeschaltet ist.

In der Keilstufe 15 ist das kontinuierlich umlaufende Filterband 19 auf dicht nebeneinanderliegenden Rollen 53 abgestützt, wobei gleiche dicht nebeneinanderliegende Rollen 53 auf der gegenüberliegenden Seite des Keilraums 36 das Druckband 35 abstützen.

Wie veranschaulicht, ist in jeder der Entwässerungsstufen 2 bis 4 das dazugehörige Filterband 17, 18 und 19 unabhängig von den anderen Filterbändern angetrieben, wobei in den Vorentwässerungs- und Mitteldruckstufen 3 und 4 die filterbänder 18, 19 kontinuierlich mit regelbaren Geschwindigkeiten angetrieben sind. Bei einzelnen Ausführungsformen ist es darüberhinaus bevorzugt, sämtlichen Filterbändern der einzelnen Entwässerungsstufen 2 bis 4 unterschiedliche Maschenweiten und Antriebsgeschwindigkeiten zu geben.

Bei einer Abwandlung der in Fig. 1 veranschaulichten Keilstufe 15 kann der Keilraum 36 zwischen dem Druckband 35 und dem Filterband 19 verstellbar ausgebildet werden, indem eine der beiden aus den Rollen 53 bestehenden Pumpen in einem schwenkbaren Rahmen (nicht dargestellt) zusammengefaßt werden, wobei auf das an den ersten Puffer oder Stapelbehälter 11A angrenzende Ende eines derartigen Rahmens Druck ausgeübt werden kann.

Die an den zweiten Puffer- oder Stapelbehälter anschliessende Hochdruckstufe 2 bildet ebenfalls eine allseitig geschlossene Schlammkammer. Die Hochdruckstufe 2 besteht aus einem horizontalen Filterband 17, welches entsprechend dem Druckhub der Hochdruckstufe 2 intermittierend angetrieben ist. Über dem horizontalen Filterband 17 ist eine Druck membrane 50 mit seitlichen Dichtleisten angeordnet, wobei der hierdurch zwischen dem Filterband 17 und der Druckmembrane 50 ausgebildete Raum an den Stirnseiten durch zwei Schieber 55, 56 verschlossen ist.

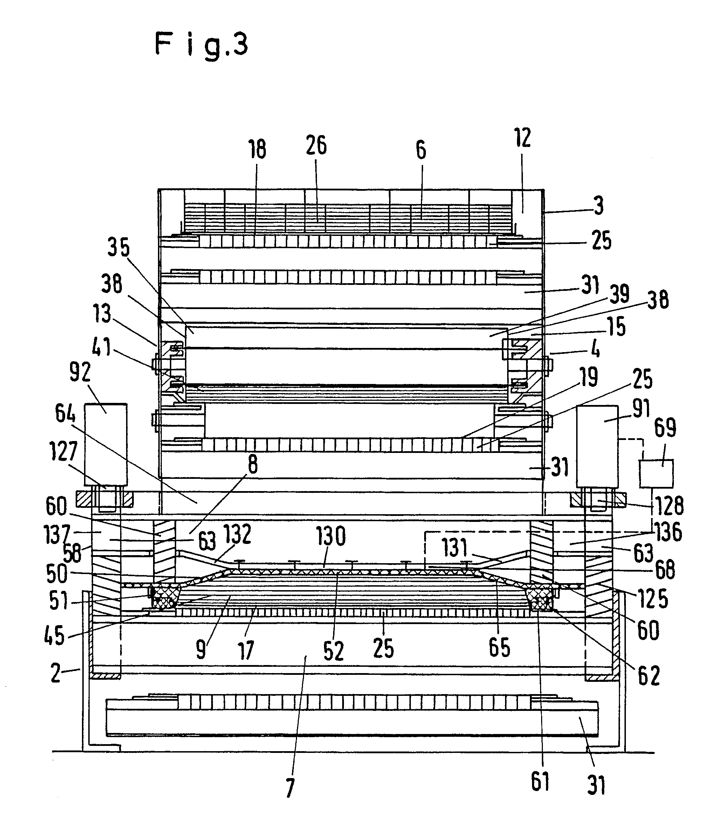

Wie aus der Schnittansicht gemäß Fig. 3 ersichtlich, ist die Druckmembrane 50 in einem Mittelbereich 52 mit den beweglichen Druckplatten 8 der Hochdruckstufe 2 verbunden.

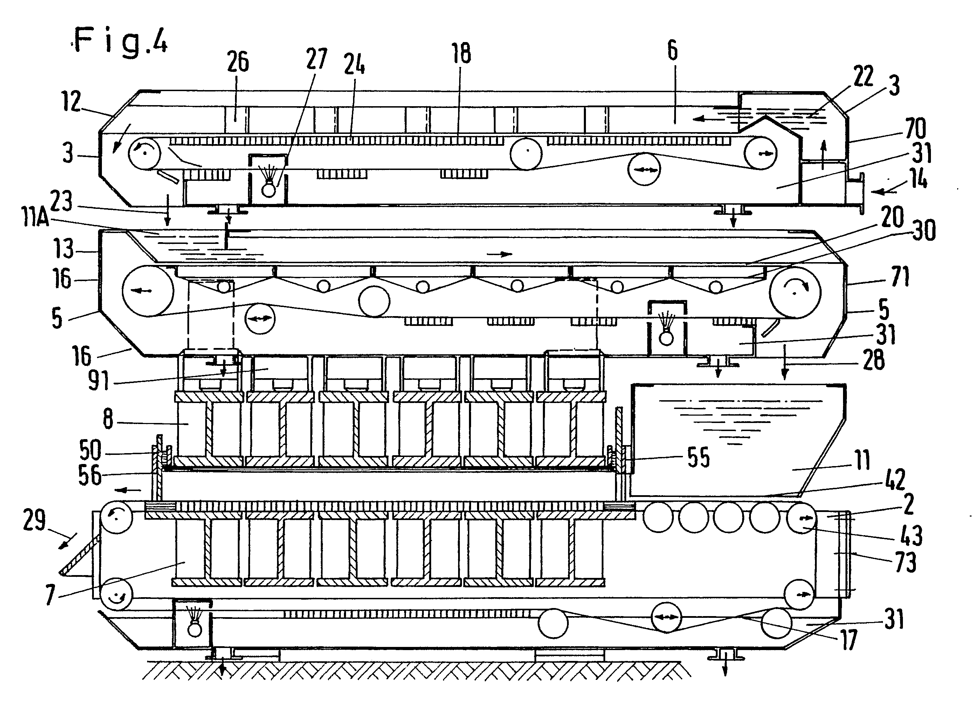

Wie weiter unten unter Bezugnahme auf die detaillierteren Zeichnungen gemäß Fig. 4 noch näher erläutert wird, sind die Schieber 55, 56 als Flachschieber ausgebildet.

Wie aus Fig. 3 ersichtlich, sind die seitlichen Dichtleisten 51 an der Druckmembran 50 in Richtung des Filterbandes 17 durch Federn 60 vorgespannt, so daß die Dichtleisten ständig in Berührung mit dem Filterband 17 stehen. Die Federn sind hierbei an der beweglichen Druckplatte 8 abgestützt, derart, daß beim Druckhub gleichzeitig der Dichthub erhöht wird.

Die Hochdruckstufe 8 besteht aus der Druckmembran 50 und dem diskontinuierlich intermittierend umlaufenden Filterband 17 aus einer Anzahl von stationären Druckplattenpaaren 7 und 8, von denen ein jedes aus einer unteren, feststehend gelagerten Druckplatte 7 und einer oberen, der unteren Druckplatte 7 genau gegenüberliegenden, in vertikaler Richtung bewegbaren Druckplatte 8 besteht. Jedes Druckplattenpaar 7, 8 ist in einem Rahmen 58 zusammengefaßt, welcher durch die untere Druckplatte 7, zwei Seitenträger 63 und ein Querhaupt 64 gebildet ist. Jeder der Rahmen 58 bildet ein Segment 90, wobei die Hochdruckstufe aus einer gewünschten Anzahl derartiger Segmente aufgebaut wird.

Am oberen Querhaupt 64 der Rahmen 58 sind seitlich je ein als Hydraulikzylinder ausgebildeter Hochdruckerzeuger 91 bzw. 92 befestigt, dessen in vertikaler Richtung nach un ten wirkende Kolben 127, 128 mit der oberen Druckplatte 8 zusammenwirken, um diese bei Bedarf unter Hochdruck in Richtung der unteren Druckplatte 7 zu drücken, wodurch der in der Schlammkammer 45 der Hochdruckstufe zwischen dem Filterband 17 und der Druckmembran 50 eingeschlossene Schlamm unter stationärem Hochdruck entwässert wird. Die hierbei auftretenden Preßkräfte sind in dem geschlossenem System der Rahmen 58 aufgenommen und werden nicht auf irgendwelche Fundamente übertragen.

Wie insbesondere aus der Schnittansicht gemäß Fig. 3 ersichtlich, weist jede Druckplatte 8 an jeder Seite einen nach außen verlängerten Arm 136, 137 auf, zwischen welchem und dem gegenüberliegenden Ende der unteren stationären Druckplatte 7 eine Druckfeder 125 eingespannt ist. Die Druckfedern 125 bewirken, daß sich die oberen Druckplatten 8 nach Beendigung des Preßvorgangs und nach Entlastung der Hochdruckerzeuger 91, 92 selbsttätig von den unteren Druckplatten 7 abheben und somit einen Vorschub des Filterbandes 17 mit dem darauf befindlichen Schlammkuchen 10 zu ermöglichen. Zur Erleichterung des Vorschubs und zur Herabsetzung der Reibung können (in den Zeichnungen nicht dargestellt) zur Führung des Filterbandes 17 zusätzliche federvorgespannte Druckrollen vorgesehen sein, welche sich durch entsprechende Ausnehmungen in der Entwässerungsplattenanordnung 24, d. h. in dem Kunststoffgitter 25, hindurcherstrecken und das Filterband 17 nach Entlastung der oberen Druckplatten 8 geringfügig anheben.

Da bei dem veranschaulichten Ausführungsbeispiel die seitlichen Dichtleisten 51 der Druckplatte 50 unter dem Druck der Federn 60 ständig mit dem Filterband 17 in Berührung stehen, ist es bevorzugt, an den Dichtleisten 51, an deren Berührungsfläche 61 mit dem Filterband 17 auswechselbare Verschleißteile vorzusehen, welche beispielsweise in einer Art Nut- und Federverbindung in die Dichtleisten 51 eingeschoben werden.

Bei den Verschleißteilen 62 kann es sich um bevorzugt reibungsarme Kunststoffleisten o. ä. handeln.

Die Druckmembran 50 ist beim Ausführungsbeispiel als durchgehende Gummidecke 65 ausgebildet.

Wie ferner aus Fig. 3 ersichtlich, sind bei einer besonders bevorzugten Ausführungsform in der Schlammkammer 45 der Hochdruckstufe 2 Druckfühler 68 vorgesehen, welche über eine Steuereinrichtung 69 die Druckerhöhung in Abhängigkeit vom in dem Schlamm herrschenden Druck selbsttätig schalten. Die Druckerhöhung erfolgt bei diesem Ausführungsbeispiel daher automatisch entsprechend dem bereits erreichten Entwässerungsgrad, was wesentlich exakter ist als die bisher übliche Zeitschaltung. Die Druckfühler passen über die Steuereinrichtung folglich den Druck auf das Entwässerungsverhalten des jeweils vorliegenden Schlammes an.

Wie weiterhin aus der Schnittansicht gemäß Fig. 3 ersichtlich, weisen die beweglichen Druckplatten 8 quer zur Bewegungsrichtung des Schlammvolumens einen vorstehenden, im wesentlichen zur Fläche des Filterbandes 17 parallelen Mittelbereich 130 auf, welcher an beiden Seiten in schräg nach oben verlaufende Bereiche 131,132 übergeht. Durch diese Gestaltung wird ein besonders günstiger Druckverlauf des über die Druckmembran 50 ausgeübten Drucks erzielt. Die Druckmembran ist hierbei an dem Mittelbereich 130 befestigt. Wie unschwer aus der Schnittansicht gemäß Fig. 3 ersichtlich, wird daher bei Druck durch die Druckplatten 8 und bei entgegengesetztem Entlastungshub lediglich am Übergang zwischen dem Mittelbereich 130 und den schräg nach oben laufenden Bereichen 131, 132 eine Biegebewegung in der Druckmembran 50 hervorgerufen, so daß eine Art großflächiger Kolben geschaffen wird.

Der Mittelbereich kann hierbei bis zu vier Fünfteln oder mehr der Gesamtbreite der Druckplatten 8 betragen.

Ferner können die die Dichtleisten 51 der Druckmembran 50 beaufschlagenden Federn in ihrer Druckkraft verstellbar ausgebildet sein, um im Bedarfsfall bei schließfähigeren Schlämmen die minimale Dichtkraft beim Entlastungshub zu erhöhen.

Die bisher beschriebene Vorrichtung 1 gemäß den Fig. 1 bis 3 arbeitet auf folgende Weise:
Aus der Vorbehandlungseinrichtung 21 gelangt der mit Flokkungsmitteln und anderen die Entwässerung unterstützenden Substanzen versetzte Schlammart zunächst in den Misch-und Reaktionsraum 22, von wo er über ein Wehr 48 auf das kontinuierlich umlaufende Filterband 18 der Schwerkraft-Vorentwässerungstufe 12 gelangt. In der im wesentlichen waagerecht verlaufenden Entwässerungsstrecke wird der Schlamm 6 durch die Schlammpflüge 26 hin und wieder gewendet und unter Schwerkraft entwässert, wobei das Filtrat durch die das Filterband 18 abstützenden Kunststoffgitter 25 hindurch nach unten in eine Filtratsammelwanne 31 gelangt und seitlich abgeführt wird.

Am Ausgang 23 der Vorentwässerungstufe 12 läuft das Filterband 18 um eine Umlenkrolle 44 zurück durch eine Wascheinrichtung 27, während der Schlamm 6 nach unten in den ersten Puffer- oder Stapelbehälter 11A vor der Keistufe 15 gelangt.

In dem Puffer- oder Stapelbehälter 11 A wird der Schlamm entsprechend dem Ansteigen des Schlammspiegels in dem Behälter 11A weiter unter Schwerkraftwirkung entwässert, wobei das Filtrat durch das kontinuierlich umlaufende Filterband 19 der Keilstufe 15 und durch das darunter angeordnete Kunststoffgitter 24 in die der Keilstufe zugeordnete Filtratsammelwanne 31 gelangt.

In der Keilstufe 16 wird der Schlamm durch das kontinuierlich umlaufende Filterband 19 und das auflaufende Druckband 35 in den Keilraum 36 portioniert gefördert und dort unter dem stetig steigenden Druck als geschlossenes Schlammvolumen der in Einzelkammern 41 unterteilten Schlammkammer 40 der Mitteldruckstufe entwässert.

Am Ende des Keilraums 36 läuft das Filterband 19 um eine Umlenkrolle 59 zurück durch eine Wascheinrichtung 27, wobei der Schlamm in weitgehend entwässerter Form am Ausgang 28 der Mitteldruckstufe 13 in den der Hochdruckstufe 2 vorgestalteten Puffer- oder Stapelbehälter 11 übergeben wird.

Die Zuführung des Schlamms aus der Mitteldruckstufe 13 in den Puffer- oder Stapelbehälter 11 erfolgt der entsprechend der kontinuierlichen Arbeitsweise der vorgeschaiteten Entwässerungsstufen kontinuierlich, während aus dem Puffer- oder Stapelbehälter 11 der Schlamm entsprechend der diskontinuierlichen taktweisen Arbeitsweise der Hochdruckstufe diskontinuierlich abgezogen wird.

Der Boden 42 des Puffer- oder Stapelbehälters 11 ist durch das Filterband 17 der Hochdruckstufe 2 gebildet, welches im Bereich des Bodens 42 auf dicht nebeneinander angeordneten Rollen abgestützt ist.

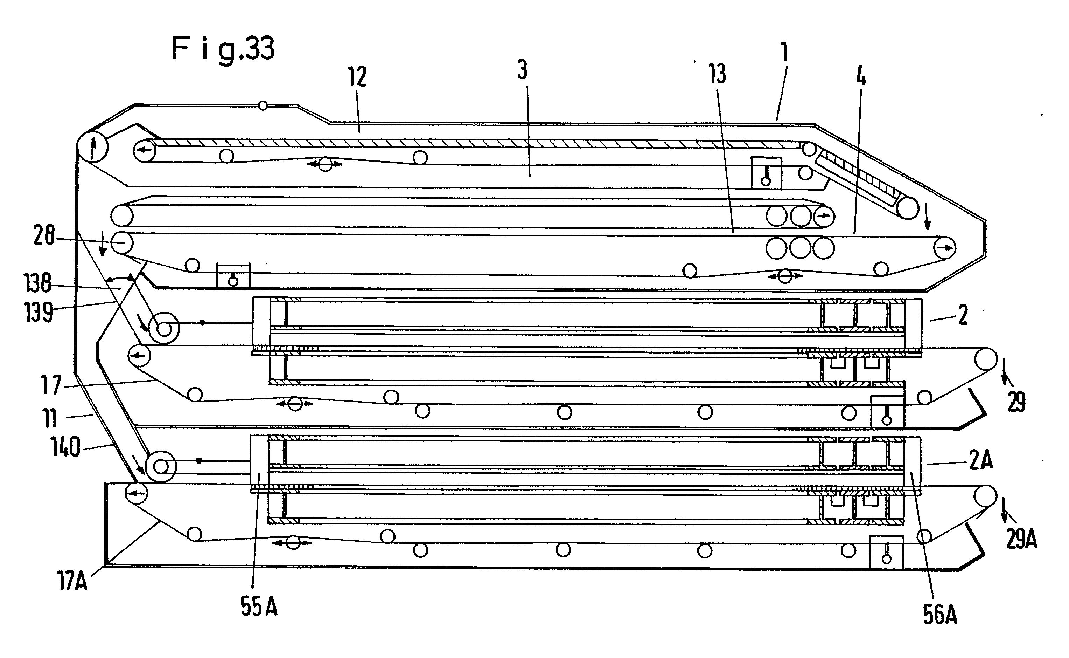

Bei der Ausführungsform gemäß Fig. 33, welche hinsichtlich der sonstigen konstruktiven Einzelheiten den zuvor geschilderten, Ausführungsformen entspricht, ist die Stapeleinrichtung 11 durch mindestens eine zweite Hochdruckstufe 2A gebildet. Eine Umschalteinrichtung 138 ist vorgesehen, um die Hochdruckstufen 2, 2A abwechselnd zu füllen. Die Hochdruckstufen 2 und 2A sind abwechselnd taktweise geöffnet oder geschlossen und führen abwechselnd jeweils einen Preßhub aus. Während eine der Hochdruckstufen 2 oder 2A ihren Preßhub ausführt, ist die andere Hochdruckstufe 2 oder 2A geöffnet und dient als Stapelvorrichtung 11 für die den Preßhub ausführende Hochdruckstufe.

Die veranschaulichte Umschalteinrichtung 138 ist als pneumatisch oder elektrisch gesteuerte Umlenkklappe 139 ausgebildet, welche über eine Schütte 140 od. dgl. abwechselnd den Ausgang 28 der Mitteldruckstufe 13 mit einer der Hochdruckstufen 2 oder 2A verbindet und zwar jeweils mit derjenigen Hochdruckstufe, die gerade geöffnet ist und nicht ihren Preßhub ausübt.

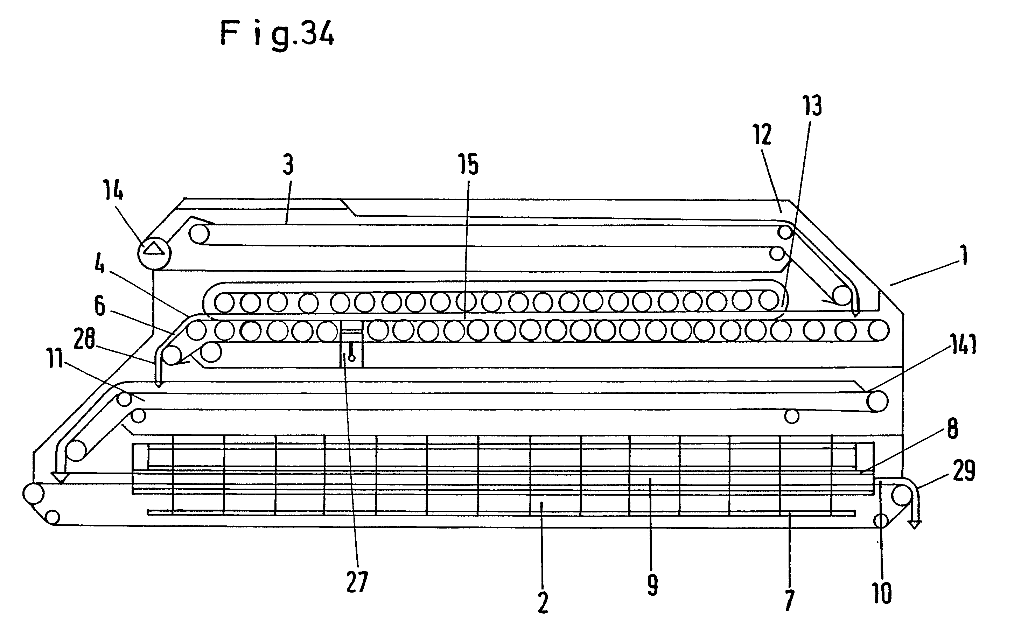

Bei der in Fig. 34 veranschaulichten Ausführungsform, welche wiederum hinsichtlich sonstiger Einzelheiten den oben beschriebenen Ausführungsformen entspricht, ist die Stapeleinrichtung 11 als Stapel band 141 ausgebildet, wobei das Stapelband 141 in seiner Antriebsrichtung umkehrbar ist.

Beim Preßhub der Hochdruckstufe 2 läuft hierbei das Stapelband 141 in der Ansicht gemäß Fig. 34 nach rechts und nimmt den aus dem Ausgang 28 der Mitteldruckstufe 13 abgeworfenen Schlamm auf. Wenn die Hochdruckstufe ihren Preßhub beendet hat, wird die Drehrichtung des Antriebs des Stapelbands 141 umgekehrt, so daß der darauf befindliche Schlamm zusammen mit dem weiter aus, der Mitteldruckstufe 13 austretenden Schlamm in die Hochdruckstufe eingespeist wird. Bei Beginn des Preßhubs der Hochdruckstufe 2 wird die Drehrichtung des Antriebs des Stapelbands 141 wiederum umgekehrt, so daß dieses erneut als Puffer wirksam wird.

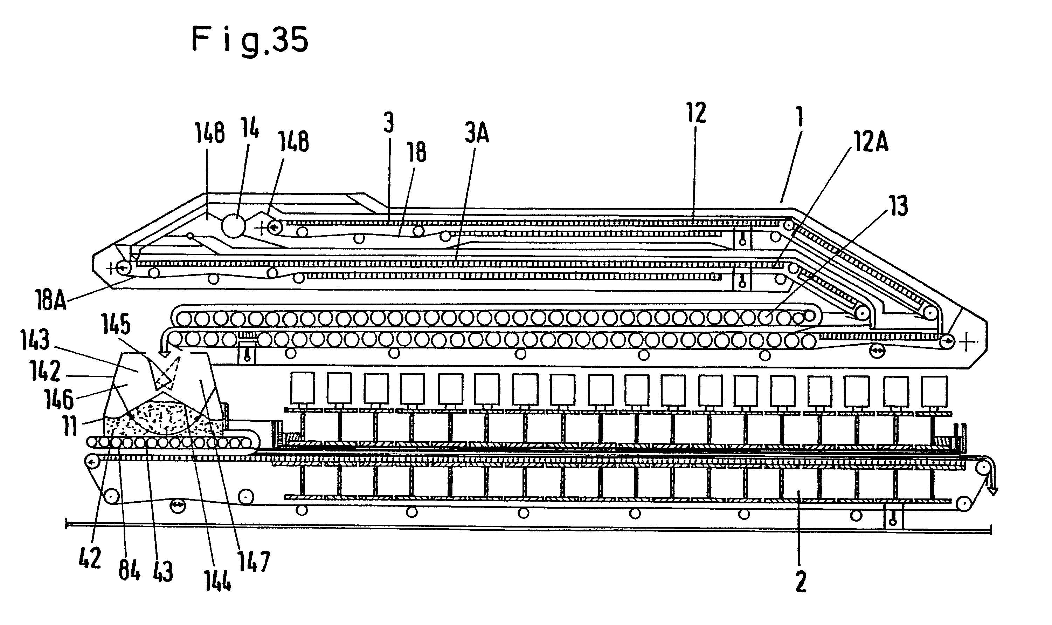

Bei der Ausführungsform gemäß Fig. 35, die wiederum hinsichtlich nicht näher erläuterter konstruktiver Einzelheiten den zuvor geschilderten Ausführungsformen entspricht, sind zwei weitere vorteilhafte Besonderheiten nach der Erfindung veranschaulicht.

Zum einen ist die Stapeleinrichtung 11 als Vorratsbunker 142 ausgebildet und zum anderen ist die Vorentwässerungstufe 3, wie weiter unten näher erläutert, als Doppelstrecke ausgeführt.

Der veranschaulichte, die Stapeleinrichtung 11 bildende Vorratsbunker 142 enthält eine Portionierungseinrichtung 143, welche den aus der Mitteldruckstufe 13 kontinuierlich zugeführten Schlamm abwechselnd in der Einspeisemenge für die Hochdruckstufe 2 entsprechende Portionen aufteilt. Zu diesem Zweck ist die Portionierungseinrichtung 143 als den Vorratsbunker 142 in zwei Kammern 146, 147 unterteilende Steuerklappe 144 ausgebildet. Wie veranschaulicht, nehmen die Kammern 146, 147 den Schlamm 6 abwechselnd auf, wobei bei der Umschaltung der Steuerklappe 144 zur Bildung der jeweils anderen Kammer die zuvor aufgenommene Schlammportion zur Einspeisung in die Hochdruckstufe 2 freigibt. Um sicherzustellen, daß eine saubere Aufteilung der Portionen erfolgt, ist die Steuerklappe 144 mit einer Leitklappe 145 verbunden, welche den Schlamm in die entsprechende Kammer 146 oder 147 leitet.

Die ebenfalls in Fig. 35 stark schematisch veranschaulichte, bevorzugte Ausführungsform der Vorentwässerungsstufe 3 weist zwei parallele Schwerkraft-Vorentwässerungsstufen 12, 12A auf, welche gemeinsam über die Schlammzuführung 14 beschickt werden. Die beiden parallelen und übereinander angeordneten Schwerkraft-Vorentwässerungsstufen 12, 12A weisen ihre Ausgänge 23, 23A gemeinsam auf der Eingangsseite der Mitteldruckstufe 13 auf.

Die Schlammzuführung 14 ist hierbei derart gestaltet, daß über Wehre 148, 149 beide Schwerkraft-Vorentwässerungsstufen 12 und 12A mit gleich großen Schlammengen beschickt werden. Die Filterbänder 18 und 18A der Schwerkraft-Vorentwässerungsstufen 12 und 12A werden mit gleicher Geschwindigkeit angetrieben. Diese Ausführungsform bietet den Vorteil, wenn praktisch die Mitteldruckstufe 13 derart ausgelegt ist, daß eine Schichthöhe von 60 mm auf 30 mm nach dem Durchlauf durch die Mitteldruckstufe 13 reduziert wird, jede der Schwerkraft-Vorentwässerungsstufen ebenfalls mit einer Schichtdicke von 60 mm beschickt werden kann, die dann auf einer entsprechend grösseren Fläche zu zwei mal 30 mm reduziert wird und daher der Aufgabehöhe für die Mitteldruckstufe entspricht.

Es hat sich gezeigt, daß die Kombination einer Vorentwässerungsstufe 3 mit der Mitteldruckstufe 13 in der Ausführungsform gemäß Fig. 35 bereits als vollwertige Siebbandpresse benutzt werden kann oder auch geeignet ist, andersartigen Hochdruckstufen vorgeschaltet zu werden.

Sämtliche aus der Beschreibung, den Ansprüchen und Zeichnungen hervorgehenden Merkmale und Vorteile der Erfindung. einschließlich konstruktiver Einzelheiten und räumlicher Anordnungen, können sowohl für sich als auch in beliebiger Kombination erfindungswesentlich sein.

**Ansprüche**

1. Vorrichtung zum Entwässern von Schlamm und ähnlichen Substanzen, insbesondere von Abwasser-, Abfall- und Produktionsschlämmen, mit Entwässerungsflächen, welche einer Hochdruckstufe und mindestens einer vor dieser liegenden Entwässerungsstufe geringeren Drucks zugeordnet sind, bei der der zu entwässernde Schlamm kontinuierlich der Vorrichtung zugeführt und anschließend in ein sich an stationären Druckplatten intermittierend vorbeibewegendes, geschlossenes Schlammkammervolumen eingespeist wird, wobei das Schlammkammervolumen zwischen den Druckplatten einem Hochdruck ausgesetzt und der erhaltene Schlammkuchen intermittierend ausgetragen wird, und wobei ferner zwischen der kontinuierlichen Schlammzuführung und der diskontinuierlich intermittierenden Schlammeinspeisung eine Puffer- oder Stapeleinrichtung vorgesehen ist, **dadurch gekennzeichnet,** daß die Stapeleinrichtung (11) zwischen der Hochdruckstufe (2) und der/oder den vorangehenden Vorentwässerungsstufen (3, 4, 5) geringeren Drucks angeordnet ist.

2. Vorrichtung nach Anspruch 1, dadurch gekennzeichnet, daß die Stapeleinrichtung (11) durch mindestens eine zweite Hoch druckstufe (2A) gebildet ist, daß eine Umschalteinrichtung (138) zum abwechselnden Füllen der Hochdruckstufen (2, 2A) vorgesehen ist, derart, daß die mindestens beiden Hochdruckstufen (2, 2A) jeweils abwechselnd die Stapeleinrichtung (11) für die jeweils den Preßhub ausführende Hochdruckstufe (2 oder 2A) bilden, und daß die Umschalteinrichtung (138) durch eine Umlenkklappe (139) gebildet ist, welche über eine Schütte (140) od. dgl. abwechselnd den Ausgang (28) der Mitteldruckstufe (13) mit einer der Hochdruckstufen (2 oder 2A) verbindet.

3. Vorrichtung nach Anspruch 1 , dadurch gekennzeichnet, daß die Stapeleinrichtung (11) als Stapelband (141) ausgebildet ist, und daß das Stapelband (141) in seiner Laufrichtung umkehrbar ist.

4. Vorrichtung nach Anspruch 1, dadurch gekennzeichnet, daß die Stapeleinrichtung (11) als Vorratsbunker (142) ausgebildet ist, daß der Vorratsbunker (142) eine Portioniereinrichtung (143) aufweist, welche den kontinuierlich zugeführten Schlamm (6) abwechselnd in der Einspeismenge für die Hochdruckstufe (2, 2A) entsprechende Portionen aufteilt, und daß die Portioniereinrichtung (143) als den Vorratsbunker (142) in zwei Kammern (146, 147) unterteilende Steuerklappe (144) ausgebildet ist, welche den kontinuierlich zugeführten Schlamm (6) abwechselnd in Portionen aufnehmen und bei Umschaltung der Steuerklappe (144) jeweils eine Portion zur Einspeisung in die Hochdruckstufe (2) freigeben.

5. Vorrichtung nach einem der Ansprüche 1 bis 4, dadurch gekennzeichnet, daß die Vorrichtung (1) aus einer Schwerkraft-Vorentwässerungsstufe (12), einer Mitteldruckstufe (13) oder Keilstufe (15) sowie der Hochdruckstufe (2) besteht, und daß die Puffer- oder Stapeleinrichtung (11) zwischen der Vorentwässerungsstufe (12) und der Mitteldruckstufe (13) oder Keilstufe (15) und/oder zwischen der Mitteldruckstufe (13) und der oder den Hochdruckstufen (2, 2A) angeordnet ist.

6. Vorrichtung nach einem der Ansprüche 1 bis 5, dadurch gekennzeichnet, daß in jeder der Entwässerungsstufen (2 bis 5) ein unabhängig angetriebenes endloses Filterband (17 bis 20) vorgesehen ist, und daß die Filterbänder (18 bis 20) der Vorentwässerungsstufen (3 bis 5) und/oder der Mitteldruckstufen (13, 15, 16) kontinuierlich mit regelbaren Geschwindigkeiten angetrieben sind.

7. Vorrichtung nach Anspruch 3 oder 4, dadurch gekennzeichnet, daß die Filterbänder (17 bis 20) der einzelnen Entwässerungsstufen (2 bis 5) unterschiedliche Maschenweiten und Antriebsgeschwindigkeiten aufweisen.

8. Vorrichtung nach Anspruch 7, dadurch gekennzeichnet, daß die Vorentwässerungsstufe (3) aus zwei parallelen Schwerkraft-Vorentwässerungsstufen (12, 12A) besteht, welche eine gemeinsame Schlammzuführung (14) aufweisen und deren Ausgänge (23, 23A) auf der Eingangsseite der Mitteldruckstufe (13) münden, daß die Schlammzuführung (14) über Wehre (148, 149) beide Schwerkraft-Vorentwässerungsstufen (12, 12A) mit gleichen Schlamm-Mengen beschickt, und daß die Filterbänder (18, 18A) der Schwerkraft-Vorentwässerungsstufen (12, 12A) mit gleicher Geschwindigkeit angetrieben sind.

9. Vorrichtung nach einem der vorstehenden Ansprüche, dadurch gekennzeichnet, daß die Schwerkraft-Vorentwässerungsstufe (12) aus einem horizontalen Filterband (18) besteht, und daß in der Förderbahn des Filterbandes (18) Schlammpflüge (26) vorgesehen sind.

10. Vorrichtung nach einem der vorstehenden Ansprüche, dadurch gekennzeichnet, daß eine der vor der Hochdruckstufe angeordneten Entwässerungsstufen als Unterdruckstufe (16) mit unter der Schlammschicht (6) angeordneten Einrichtungen (30) zur Erzeugung von Unterdruck ausgebildet ist.

11. Vorrichtung nach einem der Ansprüche 1 bis 10, dadurch gekennzeichnet, daß die Mitteldruckstufe (13) aus einem horizon talen Filterband (19) und einem darüber umlaufenden Druckband (35) besteht, wobei der Abstand zwischen dem Filterband (19) und dem Druckband (35) unter Bildung einer Keilstufe (15) in Förderrichtung keilförmig abnimmt, daß der Keilraum (36) zwischen dem Druckband (35) und dem Filterband (19) verstellbar ist, daß das Filterband (19) mit dem Druckband (35) eine allseitig geschlossene Schlammkammer (40) bildet, daß das Druckband (35) eine Vielzahl von aneinander anschließenden kastenförmigen Formationen (37) aufweist, welche die Schlammkammer (40) in Einzelkammern (41) unterteilt, und daß die Formationen (37) durch an beiden Seiten des Druckbandes (35) vorgesehene Randleisten (38) und durch diese verbindende, im Abstand zueinander angeordnete Querstege (39) gebildet sind.

12. Vorrichtung nach einem der vorstehenden Ansprüche, dadurch gekennzeichnet, daß die Hochdruckstufe (2) als allseitig geschlossene Schlammkammer (45) ausgebildet ist.

13. Vorrichtung nach Anspruch 12, dadurch gekennzeichnet, daß die Hochdruckstufen (2, 2A) aus einem horizontalen Filterband (17), einer Druckmembrane (50) mit seitlichen Dichtleisten (51) und aus zwei die Stirnseiten verschließenden Schiebern (55, 56) besteht, und daß die Schieber (55, 56) als Flachschieber ausgebildet sind.

14. Vorrichtung nach Anspruch 13, dadurch gekennzeichnet, daß die Druckmembran (50) in einem Mittelbereich (52) mit den beweglichen Druckplatten (8) verbunden ist, und daß die Dichtleisten (51) in Richtung des Filterbandes (17) federvorgespannt sind.

15. Vorrichtung nach einem der Ansprüche 13 oder 14, dadurch gekennzeichnet, daß an der Berührungsfläche (61) der Dichtleisten (51) mit dem Filterband (17) auswechselbare Verschleißteile (62) vorgesehen sind, daß die Druckmembran (50) als mit den Dichtleisten (51) verbundene Gummidecke (65) ausgebildet ist, und daß die die Dichtleisten beaufschlagenden Federn (60) an den beweglichen Druckplatten (8) abgestützt sind, derart, daß beim Druckhub gleichzeitig der Dichtdruck erhöht wird.

16. Vorrichtung nach einem der vorstehenden Ansprüche, dadurch gekennzeichnet, daß in der Kammer (45) der Hochdruckstufe (2) Druckfühler (68) vorgesehen sind, welche über eine Steuereinrichtung (69) die Druckerhöhung in Abhängigkeit vom gemessenen Druck selbsttätig schalten.

17. Vorrichtung nach einem oder mehreren der vorstehenden Ansprüche, dadurch gekennzeichnet, daß die Vorentwässerungsstufe (12) die Mitteldruckstufen (13, 15, 16) und die Hochdruckstufe (2) als stapelbare, miteinander verbindbare, unabhängige Einheiten (70 bis 73) ausgebildet sind.

18. Vorrichtung nach einem der vorstehenden Ansprüche, dadurch gekennzeichnet, daß einige oder sämtliche Entwässerungsflächen (75 bis 77) kreisringförmig ausgebildet sind und aus übereinander angeordneten Kreisscheiben (80, 81, 82) bestehen, welche um eine im wesentlichen vertikale Drehachse (85, 86, 87) drehbar gelagert sind, daß die oberen Kreisscheiben (80, 81) als Vorentwässerungsstufe (12) und Mitteldruckstufe (13) ausgebildet sind, daß die untere Kreisscheibe (82) als Hochdruckstufe (2) ausgebildet ist, und daß mindestens zwischen der Mitteldruckstufe (13) und der Hochdrucksufe (12) ein Puffer oder eine Stapeleinrichtung (11) vorgesehen ist.

19. Vorrictung nach Anspruch 18, dadurch gekennzeichnet, daß der Puffer als Stapelbehälter (11) ausgebildet ist und über der unteren Kreisscheibe (82) angeordnet ist und der Boden (83) des Stapelbehälters (11) durch die Entwässerungsfläche (77) gebildet ist, daß die Hochdruckstufe (2) durch eine Vielzahl von nebeneinander angeordneten, sich radial erstreckenden Segmenten (90) gebildet ist, welche mit der Druckmembran (50) verbrunden sind, daß jedem Segment (90) zumindest ein Hochdruckerzeuger (91, 92) zugeordnet ist, daß eine obere und eine untere, insgesamt jeweils kreisringförmige Druckplatten anordnung (95, 96) vorgesehen ist, daß der Abstand zwischen den beiden Druckplattenordnungen wahlweise veränderbar ist, daß die untere Druckplatte (96) eine mit einem Drehantrieb (100) versehene Kreisscheibe (82, 101) aufweist, und daß jedes Segment (90) eine obere Druckplatte (96) aufweist, und die obere Druckplatte (96) unabhängig von der Lage benachbarter, oberer Druckplatten (96) anhebbar und absenkbar ist.

20. Vorrichtung nach Anspruch 19, dadurch gekennzeichnet, daß auf der unteren Druckplattenanordnung (96) eine mit Entwässerungssrukturen versehene, insgesamt kreisringförmige Entwässerungsplattenanordnung (102) angeordnet ist, daß auf der Entwässerungsplattenanordnung (102) ein kreisringförmiges Filterband (103) aufliegt, und daß die Entwässerungsplattenanordnung (102) als elastische Platte, insbesondere als Platte aus Gummi oder Kunststoff, mit senkrechten Durchgangsöffnungen (104) und waagerecht verlaufenden Entwässerungskanälen (105) ausgebildet ist.

21. Vorrichtung nach einem der vorstehenden Ansprüche 18 bis 20, dadurch gekennzeichnet, daß drei übereinander angeordnete Kreisscheiben (80, 81, 82) mit Filtereinrichtungen (103, 106, 107) vorgesehen sind, von denen die oberste eine Schwerkraftentwässerungsstufe (12), die mittlere eine als Unterdruckstufe (16) ausgebildete Miteldruckstufe (13) und die unterste die Hochdruckstufe (2) bildet, daß die oberen Kreisscheiben (80, 81) mit kreisringförmigen Entwässerungsplatten (108) mit senkrechten Durchgangsöffnungen (104) versehen sind, daß die Drehachsen (85, 86, 87) der Kreisscheiben (80, 81, 82) gegeneinander seitlich versetz angeordnet sind, daß die Kreisscheiben (80, 81, 82) je eine äußere umlaufende, ringförmige Stirnfläche (109, 110, 111) aufweisen und mittels je eines hieren angreifenden Reibradantriebes (112, 113, 114) antreibbar sind, und daß an beiden Enden der Hochdruckstufe (2) Schrieber (115, 116) vorgesehen sind, welche die allseitig geschlossene Schlammkammer (45) abschließen.

22. Vorrichtung nach einem der Ansprüche 18 bis 21, durch gekennzeichnet, daß die Segmente (90) durch geschlossene Rahmen (120) gebildet sind, daß sich die hydraulischen Druckzylinder (92, 93) einerseits am oberen Schenkel (121) der Rahmen (120) und andererseits an der oberen Druckplatte (95) abstützen, daß zwischen dem oberen Schenkel (121) und der oberen Druckplatte (95) wirksame Federn (125) aum Anheben der Druckplatte (95) vorgesehen sind.

23. Vorrichung nach einem der Ansprüche 18 bis 22 und Anspruch 13, dadurch gekennzeichnet, daß die Druckmembran (50) als kreisringsegmentförmiger Bauteil (126) mit Dichleisten (51) an den radialen Kanten ausgebildet ist, und daß die Schieber (115, 116) an den Enden der durch das Kreisringsegment definierten Hochdruckzone angeordnet sind.

24. Vorrichung nach einem der vorstehenden Ansprüche, dadurch gekennzeichnet, daß die beweglichen Druckplatten (8, 95) quer zur Bewegungsrichtung des Schlammvolumens einen vorstehenden, im wesentlichen zu der Filterfläche (17, 103) parallelen Mittelbereich (130) aufweisen, welcher an beiden Seiten in nach oben verlaufende, schräge Bereiche (131, 132) übergeht, daß die Druckmembran (50, 126) an dem Mittelbereich (130) befestigt ist, und daß der Mittelbereich (130) etwa die Hälfte bis vier Fünftel der Gesamtbreite der Druckplatten (8, 95) beträgt.

25. Vorrichtung nach einem der Ansprüche 18 bis 24, dadurch gekennzeichnet, daß die unterste Kreisscheibe (82) der Hochdruckstufe (2) auf abgefederten Rollen auf den unteren Schenkeln (122) der Rahmen (120) gelagert ist.

26. Vorrichtung nach einem der Ansprüche 18 bis 24, dadurch gekennzeichnet, daß die Schwerkraft-Vorentwässerungssufe (12) und die Vakuum-Mitteldruckstufe (13, 16) rund ausgebildet ist, während die Hochdruckstufe (2) langgestreckt mit einem horizontalen, umlaufenden Filterband (17) ausgebildet ist.

27. Vorrichtung nach einem der vorstehenden Ansprüche, da durch gekennzeichnet, daß der Boden (42) des Puffer- oder Stapelbehälters (11) durch ein getrennt angetriebenes Filterband (84) gebildet ist, daß die Schwerkraft-Vorentwässerungsstufe (12) und die Vakuum-Vorentwässerungssufe (16) in einer Ebene nebeneinanderliegend angeordnet sind, daß mindestens die Keilstufe (15) mit Filtratsammelwannen (31) versehen ist, und daß die die Dichtleisten (51) der Druckmembran (50) beaufschlagenden Federn (60) in ihrer Druckkraft verstellbar sind.

28. Vorrichtung nach einem der Ansprüche 18 bis 27, dadurch gekennzeichnet, daß die obere Kreisscheibe (80) hälftig aus einer Schwerkraft-Entwässerungsstufe (12) und einer Vakuumentwässerungsstufe (16) besteht, und daß die Einrichtungen (30) zur Erzeugung von Unterdruck mit der Kreisscheibe (80) umlaufen.

29. Vorrichtung nach einem der vorstehenden Ansprüche, gekennzeichnet durch die Verwendung der Kombination von Vorentwässerungsstufe (12, 12A) und Mitteldruckstufe (13) als Siebbandpresse.

Fig.1

Fig.2

# Fig.3

Fig.4

Fig.5

EP 0 396 079 A2

# Fig.6

EP 0 396 079 A2

# Fig.7

EP 0 396 079 A2

Fig.8

# Fig.9

# F i g .10

EP 0 396 079 A2

Fig.11

Fig.12

# Fig.13

EP 0 396 079 A2

# Fig.14

EP 0 396 079 A2

F i g.15

Fig.16

Fig.17

EP 0 396 079 A2

Fig.18

Fig.19

22    6    25         26    XXIII    25              12

14         18    31                           27    23

EP 0 396 079 A2

Fig.20

XXIV

12         36    37    38 15    39    35

18,19    25    31         27    XXIV

Fig.21

Fig.22

EP 0 396 079 A2

Fig.23

Fig.24

Fig.25

Fig.26

Fig.27

XXVIII

XXIX

XXX

EP 0 396 079 A2

# F i g.28

F i g.29

Fig.30

EP 0 396 079 A2

# Fig.31

86,87

11

80

91 92

2

79

EP 0 396 079 A2

F i g.32

Fig.33

Fig.34

Fig.35

EP 0 396 079 A2